# EUROPEAN PATENT SPECIFICATION

(11) **EP 3 171 427 B1**
(45) Date of publication and mention of the grant of the patent: **11.12.2019**
(21) Application number: 15822450.1
(22) Date of filing: 13.07.2015
(51) Int. Cl.: H01M 2/10, H01M 2/02, H01M 2/26, H01M 10/04, H01M 10/0525, H01M 10/0585, H01M 10/44, H01M 2/30, H01M 10/46

(54) **CELL PACK AND POWER STORAGE UNIT INCLUDING PLURALITY OF SAME**
ZELLENPACK UND STROMSPEICHEREINHEIT MIT MEHREREN DIESER ZELLENPACKS
BLOC-PILES ET UNITÉ DE STOCKAGE D'ÉNERGIE EN COMPRENANT UNE PLURALITÉ

(30) Priority: 14.07.2014 JP 2014143774
(43) Date of publication of application: 24.05.2017
(73) Proprietor: Kaneka Corporation, Osaka-shi, Osaka 530-8288 (JP)
(72) Inventor: SAWADA Yuuki, Settsu-shi Osaka 566-0072 (JP); NIWA Yukimasa, Settsu-shi Osaka 566-0072 (JP); IMAZAKI Mitsuyasu, Settsu-shi Osaka 566-0072 (JP); KIKUCHI Takashi, Settsu-shi Osaka 566-0072 (JP); KURATSU Masato, Settsu-shi Osaka 566-0072 (JP)
(74) Representative: Hoffmann Eitle
(86) International application number: PCT/JP2015/070033
(87) International publication number: WO 2016/009989

(56) References cited:
- EP-A2- 1 804 316
- JP-A- 2008 077 945
- JP-A- 2011 171 114
- JP-A- 2012 089 532
- JP-A- 2012 252 902
- JP-A- 2013 120 780
- JP-A- 2013 178 950
- JP-A- 2013 232 364
- JP-A- 2014 049 287
- US-A1- 2013 115 496
- US-A1- 2014 045 049

## Description

### Technical Field

The present invention relates to a battery pack in which a plurality of plate-shaped laminate batteries are laminated. The present invention also relates to a power storage unit containing a plurality of the battery packs.

### Background Art

It is known that, in laminate batteries, battery characteristics are reduced by gas generated during an operation cycle of charging and discharging. In order to avoid the defect, a technique in which gas is collected at an electrode by disposing a bag part at one side part of a laminate battery has been developed, as in Patent Document 1. The laminate battery of Patent Document 1, however, has a structure in which the bag part is close to tabs which are electrode terminals, and thus when a plurality of the laminate batteries are connected as a battery pack, the gas easily flows back to the tabs even if the bag part is disposed in any direction. As a result, the gas leaks from the tabs and operation failure of the batteries may possibly frequently occur, and thus there is a room for improvement.

### Citation List

### Patent Literature

Patent Document 1: Japanese Unexamined Patent Publication (Translation of PCT Application) No. JP-T 2009-545849

JP 2013 120780 A describes a laminate type cell, laminate type energy device, support member, and mounting structure. The laminate type energy device comprises: laminate type cells, each cell consisting of two or more layers of laminate which are laminated on cathode and anode active material electrodes via a separator capable of transmitting electrolyte and ions in such a way that cathode and anode extraction electrodes are exposed and that the cathode and the anode electrodes alternate with each other, and each cell being sealed with laminate sheet; and a support member which supports the laminate type cells and also adjusts their mounted positions on a module substrate. When the extraction electrodes are inserted into the module substrate via the support member, the laminate type cells are mounted in place on the module substrate in a direction vertical thereto.

JP 2011 171114 A describes a connector for connecting batteries. The connector for connecting the plurality of cell batteries having a projected thin plate-like electrode is constituted to hold a conductive bus bar in a housing provided with an electrode insertion slit for inserting an electrode of each cell battery, in one face side. An action face is provided in an inner face of the electrode insertion slit, to deform the electrode toward an electrode junction part of the bus bar along with an advance of the insertion. A junction slit communicated with the electrode insertion slit is provided in the other face side of the housing, and the electrode is joined to the electrode junction part via the junction slit.

### Summary of the Invention

### Technical Problem

An object to be attained by the present invention is to solve the problems of the conventional technique as described above, and to provide a battery pack capable of exhibiting an excellent operational stability, i.e., a battery pack capable of maintaining a high efficiency and having a high reliability, and a power storage unit having the battery pack.

### Solution to Problem

As a result of earnest study by the present inventors for solving the aforementioned problem, the following has been found: A laminate battery is prepared so that electrode terminals are disposed on one side part of the battery and a bag part is disposed on the opposite side, and a battery pack is produced with the laminate battery in a manner to have the bag part in an upper surface of the battery pack. This allows the battery pack to be operated without decreasing the battery characteristic even if gas is generated from a layered body. In addition, they have also found that, in the structure described above, when a power cable for charging and discharging is disposed in a lower side, heat easily radiates at this part, and thus malfunction of a control board caused by the heat generation, or accelerating deterioration of battery characteristics caused by the heated laminate battery can be inhibited. As a result, they have completed the present invention.

The present invention, accordingly, is a battery pack according to claim 1. It includes: a plurality of plate-shaped laminate batteries arranged in a direction vertical to a plate-shaped surface of one of the laminate batteries, in which the laminate battery contains: a layered body including a negative electrode, a separator, and a positive electrode, the layered body being disposed parallel to the plate-shaped surface of the laminate battery; an outer packaging including a laminate film enclosing the layered body; and an electrode terminal which is electrically connected to the layered body and extends from a one side part of the outer packaging, the outer packaging has, in an inside thereof, a battery part having a space in which the layered body exists and a bag part having a space a volume of which is changeable, and communicating to the battery part through a communication part, the bag part being disposed on an other side part opposite to the one side part, the battery pack includes: the laminate batteries arranged in a manner to have the other side part on an upper side of the battery pack in the vertical direction, and to have the one side part on a lower side of the battery pack in the vertical direction; and a power cable for charging and discharging on the battery pack is disposed in the lower side of the battery pack in the vertical direction.

As described above, when the plurality of the plate-shaped laminate batteries are arranged in a direction vertical to the plate-shaped surface of the laminate battery, so that the bag part is disposed in the upper side in the vertical direction, and a positive electrode terminal and a negative electrode terminal, which are at least two electrode terminals existing independently, are arranged on the lower side in the vertical direction, and the power cable for the charging and discharging on the battery pack is provided below the electrode terminals, then gas generated around the layered body during the charging and discharging can be efficiently collected into the bag part disposed upward through the communication part. In addition, when the structure described above is adopted, the pressure, gas, and quantity of heat, generated during the charging and discharging in the battery, are released into the bag part disposed upward while without affecting the layered body in the battery part, and when the power cable, or preferably the control unit, is provided in the lower part whose temperature is comparatively low, resistance loss caused by the temperature increase is inhibited, the high efficiency is maintained, and malfunction caused by the temperature increase is inhibited, whereby the battery pack having the high reliability can be obtained.

Further, the battery pack of the present invention having the structure described above is applicable to environments having various specifications even in a low rate environment suitable for a stationary storage system for home use, is low in the possibility of electric shock even if wrong use is adopted, is useful as the highly reliable battery pack capable of maintaining the high efficiency, and is highly safe and highly efficient.

The laminate battery may contain a plurality of bag parts including the bag part.

Preferably, the battery pack contains a control unit configured to control the charging and discharging, in the lower side in the vertical direction.

In the battery pack, it is preferred that the control unit is configured to perform self-discharge controlling for allowing at least one of the laminate batteries contained in the battery pack to perform self-discharging, and the control unit contains a self-discharge load resistor which generates heat during the self-discharge.

In the battery pack, it is preferred that the power cable is contained in a bottom member supporting the battery pack.

In the battery pack, it is preferred that an inside of the outer packaging, which includes the battery part, the communication part, and the bag part, is divided into a fusion bonded part and a non-fusion bonded part of the laminate film, the communication part is formed of the non-fusion bonded part, and a ratio of a length of the non-fusion bonded part to a length of the fusion bonded part is from 50/50 to 5/95 in a direction vertical to a direction from the one side part to the other side.

In the battery pack, it is preferred that a length including a length of the bag part, which is a distance from an end of the other side part of the laminate battery to a center of the communication part, is 25% or more of a full length of the laminate battery, which is a distance from the end of the other side part to an end of the one side part.

In the battery pack, it is preferred that two laminate films including the laminate film, between which the layered body is held, are fused to be sealed to each other at least at four sides of the laminate films, to thereby enclose the layered body.

In the battery pack, it is preferred that the negative electrode contains a titanium-containing oxide as a negative electrode active material thereof.

In the battery pack, it is preferred that the battery pack contains a pressing mechanism configured to apply a pressure to the layered body through the outer packaging in the direction vertical to the plate-shaped surface of the laminate battery, the pressing mechanism includes a minimum saddle part containing a lowest point at which a surface pressure is lowest in terms of an in-plane distribution of the surface pressure when the pressure is applied, and the communication part is located on the minimum saddle part.

In the battery pack, it is preferred that the in-plane distribution contains two maximum points including a highest point at which the surface pressure is the highest as one of the maximum points, and the minimum saddle part is located between the two maximum points.

In the battery pack, it is preferred that the pressing mechanism contains a flexible pressure sheet which is disposed between the adjacent laminate batteries, has an area covering the laminate battery through the laminate film, and contains a recess part corresponding to the minimum saddle part on a surface of the flexible pressure sheet.

In the battery pack, it is preferred that the pressing mechanism further contains a pair of pressure plates which hold a battery assembly in which the laminate batteries are arranged in the direction vertical to the plate-shaped surface of the laminate battery, each of the pair of the pressure plates having an area larger than an area of the flexible pressure sheet.

In the battery pack, it is preferred that the pressing mechanism further contains a highly pulling rigid girder configured to pull the pair of the pressure plates inward.

In addition, the present invention relates to a power storage unit containing a plurality of the battery packs according to the present invention, in which on the upper side of one of the battery packs in the vertical direction is disposed the lower side of another battery pack in the vertical direction.

### Advantageous Effects of Invention

In the battery pack of the present invention, gas generated in a layered body formed of a negative electrode, a separator, and a positive electrode in a laminate battery during charging and discharging, can be efficiently collected in a bag part provided in the laminate battery, and heat generated in a power cable incorporated into the laminate battery, can also be effectively released, and thus a highly reliable battery pack capable of maintaining a high efficiency of the laminate battery can be obtained.

In addition, in the battery pack of the present invention containing the pressing mechanism, the layered body is pressed from both sides in order to guide the gas generated in the battery part to the bag part, and thus deterioration of the battery characteristics including a cycle characteristic can be inhibited. Further, each electrode is appropriately pressurized in the same direction as the direction in which the layered body is laminated, and thus the battery pack can exhibit the excellent rate characteristic and cycle characteristic.

### Brief Description of the Drawings

Fig. 1 is a conceptual view showing a battery pack 1 of the present invention.
Fig. 2 is a cross-sectional conceptual view showing a laminate battery 2.
Fig. 3 is a cross-sectional conceptual view showing a laminate battery 2' in an embodiment different from those shown in Fig. 2.
Fig. 4 is a cross-sectional conceptual view showing a primary battery assembly 35, in which two laminate batteries 2 produced in Example 1, are arranged in parallel.
Fig. 5 (a) is a conceptual view showing a pressure sheet 22 which is a pressing mechanism. Fig. 5 (b) is a conceptual view showing a pressure sheet 23 which is a pressing mechanism.
Fig. 6 is an explanatory view showing an example of a method for laminating the laminate battery 2, the pressure sheet 22, and the pressure sheet 23.
Fig. 7 is an explanatory view showing a surface pressure distribution when the laminate battery 2 is pressed by the pressing mechanism.
Fig. 8 is an explanatory view showing another example of a method for laminating the laminate battery 2, the pressure sheet 22, and the pressure sheet 23, which is different from those shown in Fig. 6.
Fig. 9 is an explanatory view showing a state in which the battery assembly 12 housed in a highly pulling rigid battery pack storage case 26, is pressed by a pressing mechanism containing pressure plates 25a and 25b.
Figs. 10(a) and 10(b) are explanatory views showing a state in which the battery assembly 12 is pressed by a pressing mechanism containing highly pulling rigid girders 28a, 28b, 28c, and 28d; and Fig. 10 (a) is a side view and Fig. 10 (b) is a perspective view.
Fig. 11 is a conceptual view showing a power storage unit 100 of the present invention.
Fig. 12 is a conceptual view showing a battery pack If produced in Example 1.
Fig. 13 is a conceptual view showing a power storage unit 100a produced in Example 2.

### Description of Embodiments

Embodiments of the present invention are explained below.

The scope of the present invention is shown by claims, and it is intended that the present invention encompasses meanings equivalent to claims and all modification within the scope of claims.

### <Battery pack>

The battery pack of the present invention is a battery pack including: a plurality of plate-shaped laminate batteries arranged in a direction vertical to a plate-shaped surface of one of the laminate batteries, in which the laminate battery contains: a layered body including a negative electrode, a separator, and a positive electrode, the layered body being disposed parallel to the plate-shaped surface of the laminate battery; an outer packaging including a laminate film enclosing the layered body; and an electrode terminal which is electrically connected to the layered body and extends from a one side part of the outer packaging, the outer packaging has, in an inside thereof, a battery part having a space in which the layered body exists and a bag part having a space a volume of which is changeable, and communicating to the battery part through a communication part, the bag part being disposed on an other side part opposite to the one side part, the battery pack includes: the laminate batteries arranged in a manner to have the other side part on an upper side of the battery pack in the vertical direction, and to have the one side part on a lower side of the battery pack in the vertical direction; and a power cable for charging and discharging on the battery pack is disposed in the lower side of the battery pack in the vertical direction.

In the battery pack of the present invention, a battery pack in which a plurality of plate-shaped laminate batteries are arranged in a direction vertical to a plate-shaped surface of one of the laminate batteries. The number of the laminate batteries to be arranged in one battery pack is appropriately decided depending on the desired electric energy, and is not particularly limited.

In the present invention, a state in which the plurality of the laminate batteries are arranged in the battery pack is referred to as a battery assembly. The plurality of the laminate batteries contained in the battery assembly are preferably electrically connected to each other in series, in parallel, or in combination thereof in the battery pack of the present invention.

According to an aspect of the battery pack of the present invention, the outer packaging forming the laminate battery has, in its inside, the battery part which is a space in which the layered body exists, and the bag part which is a space having a changeable volume and communicating to the battery part through a communication part and is disposed on the other side part opposite to the one side part from which the electrode terminals extend; the laminate batteries are arranged so that the other side part is disposed on an upper side in the vertical direction of the battery pack, and the one side part is disposed on a lower side in the vertical direction of the battery pack; and the power cable is disposed immediately below the battery assembly in which the plurality of the laminate batteries are arranged, i.e., on the lower side in the vertical direction. According to an ordinary idea, when the power cable for charging and discharging on the battery assembly is provided, the power cable is disposed immediately above the battery assembly. However, in the present invention, the idea is inverted and, it has been found that the power cable is disposed in the lower side, thereby exerting the effects of the present invention.

Specifically, gas generated in the layered body in the battery part during the charging and discharging, easily moves upward, and thus when the bag part of the laminate battery is disposed on the upper side in the vertical direction, the gas moving out of the layered body does not stay in the battery part but easily moves to the bag part. From this, when the gas derived from the electrode reaction during the charging and discharging is generated, the battery characteristics are not reduced, thus resulting in the stable operation of all of the plurality of the laminate batteries arranged.

It is also possible to dispose the power cable for the charging and discharging on the lower side in the vertical direction by disposing the plurality of the laminate batteries so that the one side part from which the electrode terminals extend is disposed on the lower side in the vertical direction. The heat easily moves upward from the generation source. Accordingly, when the power cable that causes heat to be generated is provided on a lower surface, a heat radiation effect is increased. As a result, the temperature of the battery pack is reduced as a whole, whereby malfunction of a control board described below, and accelerating deterioration of the battery characteristics caused by heating the laminate batteries can be inhibited.

A structure of each part of the battery pack of the present invention is explained below.

### <Laminate battery>

The laminate battery used in the present invention contains at least a body part having a plate-shaped appearance and electrode terminals disposed on one side part of the body part.

The body part has, in the inside thereof, the layered body including the negative electrode, the separator, and the positive electrode disposed parallel to the plate-shaped surface of the laminate battery, and the outer packaging formed from the laminate film for enclosing the layered body.

It is preferred that the laminate films having a length enough to hold the layered body therebetween are fused and sealed in at least four sides of the two laminate films. Accordingly, the body part has, in the inside thereof, at least the layered body containing the negative electrode, the positive electrode, and the separator, the battery part in which the layered body exists, and the bag part in which the layered body does not exist.

The layered body used in the present invention is formed by cutting the positive electrode, the negative electrode, and the separator into the pre-determined sizes, and laminating the resulting positive electrode, separator, negative electrode, separator, positive electrode, and separator ... in this order. At that time, the separator may be formed into a zigzag form, other than the cutting into the pre-determined sized.

### <Positive electrode>

The positive electrode used in the layered body of the laminate battery may have a structure in which a positive electrode active material layer containing at least a positive electrode active material is formed on a collector. In order to improve the performance of the positive electrode active material layer, it may contain a conductive assistant and a binder.

As the positive electrode active material, it is possible to use lithium-transition metal composite oxides such as lithium cobaltate, lithium nickelate, lithium manganate, and olivine-type lithium iron oxide. Of these positive electrode active materials, lithium manganate is preferred, because the stability of the positive electrode active material itself is excellent. The lithium manganate includes a spinel-type lithium manganate, represented by Li₁₊ₓM_{y}Mn_{2-x-y}O₄ wherein 0 ≤ x ≤ 0.2, 0 < y ≤ 0.6, M is at least one element selected from the group consisting of elements belonging to Groups 2 to 13 in third and fourth periods. As the element belonging to Groups 2 to 13 in the third and fourth periods, Al, Mg, Zn, Ni, Co, Fe, Ti, Cu, Zr, and Cr are preferred and Al, Mg, Zn, Ni, Ti, and Cr are more preferred because the effect of improving the stability of the positive electrode active material itself is great, and Al, Mg, Zn, Ti, and Ni are particularly preferred because the effect of improving the stability of the positive electrode active material itself is remarkably great.

Regarding "x" in Li₁₊ₓM_{y}Mn_{2-x-y}O₄, 0 ≤ x ≤ 0.2 is required. When x < 0, the capacity of the positive electrode active material tends to be decreased. Meanwhile, when x > 0.2, a large amount of impurities such as lithium carbonate may possibly be contained.

Regarding y in Li₁₊ₓM_{y}Mn_{2-x-y}O₄, 0 < y ≤ 0.6 is required. When y = 0, the stability of the positive electrode active material tends to be decreased. Meanwhile, when y > 0.6, a large amount of impurities such as an oxide of M may possibly be contained.

Of these, one compound selected from Li₁₊ₓAl_{y}Mn_{2-x-y}O₄ wherein 0 ≤ x ≤ 0.1 and 0 < y ≤ 0.1; Li₁₊ₓMg_{y}Mn_{2-x-y}O₄ wherein 0 ≤ x ≤ 0.1 and 0 < y ≤ 0.1; Li₁₊ₓZn_{y}Mn_{2-x-y}O₄ wherein 0 ≤ x ≤ 0.1 and 0 < y ≤ 0.1; Li₁₊ₓCr_{y}Mn_{2-x-y}O₄ wherein 0 ≤ x ≤ 0.1 and 0 < y ≤ 0.1; Li₁₊ₓNi_{y}Mn_{2-x-y}O₄ wherein 0 ≤ x ≤ 0.05 and 0.45 ≤ y ≤ 0.5; Li₁₊ₓNi_{y-z}Al_{z}Mn_{2-x-y}O₄ wherein 0 ≤ x ≤ 0.05, 0.45 ≤ y ≤ 0.5, and 0.005 ≤ z ≤ 0.03; and Li₁₊ₓNi_{y-z}Ti_{z}Mn_{2-x-y}O₄ wherein 0 ≤ x ≤ 0.05, 0.45 ≤ y ≤ 0.5, and 0.005 ≤ z ≤ 0.03, is preferred because the effects of decreasing the amount of the gas generated and increasing a charge termination voltage are great when they are combined with a non-aqueous electrolyte described below; and Li₁₊ₓAl_{y}Mn_{2-x-y}O₄ wherein 0 ≤ x ≤ 0.1 and 0 < y ≤ 0.1; Li₁₊ₓMg_{y}Mn_{2-x-y}O₄ wherein 0 ≤ x ≤ 0.1 and 0 < y ≤ 0.1; Li₁₊ₓNi_{y}Mn_{2-x-y}O₄ wherein 0 ≤ x ≤ 0.05 and 0.45 ≤ y ≤ 0.5; and Li₁₊ₓNi_{y-z}Ti_{z}Mn_{2-x-y}O₄ wherein 0 ≤ x ≤ 0.05, 0.45 ≤ y ≤ 0.5 and 0.005 ≤ z ≤ 0.03 are particularly preferred because the greater effects are obtained.

When the spinel-type lithium manganate is used as the positive electrode, it may contain a cobalt compound or the lithium-transition metal composite oxide having a layered rock salt structure.

The compound containing cobalt, i.e., a cobalt compound containing no Li is exemplified by cobalt oxides, cobalt hydroxides, cobalt carbonate, cobalt chloride, cobalt sulfate, cobalt-containing organic compounds, and cobalt fluoride. Of these, the cobalt oxides, cobalt hydroxides, and cobalt carbonate are preferred because the effects of decreasing the amount of the gas generated and increasing a charge termination voltage are great, and Co₃O₄, Co₂O₃, CoO, CoOOH, and CoCO₃ are particularly preferred because the remarkably great effects can be obtained.

As the lithium-transition metal composite oxide having the layered rock salt structure, compounds represented by LiₐNi_{b}Co_{c}Mn_{d}XₑO₂ wherein X is at least one element selected from the group consisting of B, Mg, Al, Si, Ti, V, Cr, Fe, Cu, Zn, Ga, Ge, Sr, Zr, Nb, Mo, In, and Sn; 0 < a ≤ 1.2, 0 ≤ b, c, d, e ≤ 1, and b + c + d + e = 1 are preferred. Of these, one compound selected from LiNi_{1/3}CO_{1/3}Mn_{1/3}O₂, LiNi_{0.5}Co_{0.2}Mn_{0.3}O₂, LiNi_{0.5}Mn_{0.5}O₂, LiMn_{0.4}Ni_{0.4}Co_{0.2}O₂, LiMn_{0.1}Ni_{0.1}Co_{0.8}O₂, LiNi_{0.8}Co_{0.16}Al_{0.04}O₂, LiNi_{0.8}Co_{0.15}Al_{0.05}O₂, LiNiO₂, LiMnO₂, and LiCoO₂ is more preferred because the effects of decreasing the amount of the gas generated and increasing a charge termination voltage are great when it is combined with a non-aqueous electrolyte described below; and LiCoO₂ is particularly preferred because the remarkably great effects are obtained. These lithium-transition metal composite oxides containing the layered rock salt structure may include lithium-rich oxides wherein a is more than 1.

In the positive electrode, the spinel-type lithium manganate, and the compound containing cobalt and/or the lithium-transition metal composite oxide having the layered rock salt structure are contained in a range of 0.01 ≤ B / (A + B) ≤ 0.1 wherein A is a weight of the spinel-type lithium manganate, and B is a weight of the compound containing cobalt and/or the lithium-transition metal composite oxide having the layered rock salt structure. It has been found that, in the case where the range described above is satisfied, the effects of decreasing the amount of the gas generated and increasing a charge termination voltage are great when it is combined with a non-aqueous electrolyte described below.

In order to improve the conductivity or the stability, the surface of the positive electrode active material may be coated with a carbon material, metal oxide, or polymer.

The positive electrode may contain a conductive assistant. The conductive assistant is not particularly limited, and carbon materials are preferred. Examples thereof may include natural graphite, artificial graphite, vapor-grown carbon fiber, carbon nanotube, acetylene black, Ketjen black, furnace black, and the like. These carbon materials may be used alone or as a mixture of two or more kinds.

The conductive assistant is contained in the positive electrode in an amount of preferably one part by weight or more and 30 parts by weight or less, more preferably 2 parts by weight or more and 15 parts by weight or less, based on 100 parts by weight of the positive electrode active material. When the amount is within the range above, the conductivity of the positive electrode is secured. In addition, the adhesive property to a binder described below is maintained, and the sufficient adhesive property to the collector can be obtained.

The positive electrode may contain a binder. The binder is not particularly limited, and, for example, it is possible to use at least one compound selected from the group consisting of polyvinylidene fluoride (PVdF), polytetrafluoroethylene (PTFE), styrene-butadiene rubber, polyimide, and derivatives thereof.

The binder is contained in the positive electrode in an amount of preferably one part by weight or more and 30 parts by weight or less, more preferably 2 parts by weight or more and 15 parts by weight or less, based on 100 parts by weight of the positive electrode active material. When the amount is within the range above, the adhesive property between the positive electrode active material and the conductive assistant is maintained, and the sufficient adhesive property to the collector can be obtained.

A method for producing the positive electrode may be exemplified by, for example, a production method in which the positive electrode active material and, if necessary, the conductive assistant and the binder are mixed together, and then the mixture is coated on the collector, and a method of producing the positive electrode in which a slurry is prepared from a mixture containing the positive electrode active material and a solvent, the obtained slurry is coated on the collector, and then the solvent is removed is preferred because the production method is easy.

A collector used in the positive electrode is preferably aluminum or alloy thereof. The aluminum is not particularly limited, but high purity aluminum which may include, as a representative example, JIS 1030, 1050, 1085, 1N90, 1N99, or the like is preferred because it is stable in a positive electrode reaction atmosphere.

### <Negative electrode>

In the negative electrode used in the layered body of the laminate battery, a negative electrode active material layer containing at least a negative electrode active material is formed on a collector. In order to improve the performances of the negative electrode active material layer, as materials used in this layer, the conductive assistant and the binder which are used in the positive electrode may be included.

The negative electrode active material may include carbon materials, Si, SiO₂, Sn, titanium-containing oxides, and the like. The titanium-containing oxides are preferred because they have the high stability, and of these, lithium titanate and titanium dioxide are preferred because an irreversible capacity is small during the charging and discharging reaction. Specifically, lithium titanate having a spinel structure is particularly preferred because expansion and shrinkage of the negative electrode active material is small in the insertion/desorption reaction of lithium ions and thus it is difficult to break down the negative electrode active material. The lithium titanate may contain a slight amount of elements other than lithium and titanium, such as Nb. Accordingly, the negative electrode preferably contains the titanium-containing oxide as the negative electrode active material. The negative electrode contains the titanium-containing oxide as the main component of the negative electrode active material in a content of more preferably 50% by weight or more, even more preferably 90% by weight or more, and most preferably the negative electrode active material contains only the titanium-containing oxide.

The titanium dioxide may include B-type titanium dioxide, anatase-type titanium dioxide, Ramsdellite-type titanium dioxide, and the like. The B-type titanium dioxide is preferred because it has the small irreversible capacity and the excellent cycle stability.

The surface of the titanium-containing oxide may be coated with a carbon material, a metal oxide, a polymer, or the like, in order to improve the conductivity or the stability

The titanium-containing oxides may be used alone or as a mixture of two or more kinds thereof.

A conductive assistant used in the negative electrode is not particularly limited, and metal materials and carbon materials are preferred. The metal material may include copper, nickel, and the like; the carbon material may include natural graphite, artificial graphite, vapor-grown carbon fiber, carbon nanotube, acetylene black, Ketjen black, furnace black, and the like. These conductive assistants may be used alone or as a mixture of two or more kinds thereof.

The conductive assistant is contained in the negative electrode in an amount of preferably one part by weight or more and 30 parts by weight or less, more preferably 2 parts by weight or more and 15 parts by weight or less, based on 100 parts by weight of the negative electrode active material. When the amount is within the above range, the conductivity of the negative electrode can be secured. In addition, the adhesive property to a binder described below is maintained, and the sufficient adhesive property to the collector can be obtained.

In the negative electrode, a binder may be used in order to bind the negative electrode active material to the collector. The binder is not particularly limited, and, for example, it is possible to use at least one compound selected from the group consisting of polyvinylidene fluoride (PVdF), polytetrafluoroethylene (PTFE), styrene-butadiene rubber, polyimide, and derivatives thereof.

In the present invention, the binder is contained in the negative electrode in an amount of preferably one part by weight or more and 30 parts by weight or less, more preferably 2 parts by weight or more and 15 parts by weight or less, based on 100 parts by weight of the negative electrode active material. When the amount is within the above range, the adhesive property between the negative electrode active material and the conductive assistant is maintained, and the sufficient adhesive property to the collector can be obtained.

As a preferred embodiment, the negative electrode is prepared by forming a mixture containing the negative electrode active material, the conductive assistant, and the binder on the collector. A method of producing the negative electrode in which a slurry is prepared from the mixture described above and a solvent, the obtained slurry is coated on the collector, and then the solvent is removed is preferred because of its simplicity.

As the collector which can be used for the negative electrode, copper, stainless steel (SUS), nickel, titanium, aluminum, and alloy thereof are preferred.

### <Separator>

A separator used in the laminate battery is provided between the positive electrode and the negative electrode, and any material may be used so long as the separator is electrically insulative and contains a non-aqueous electrolyte described below. Examples thereof may include nylon, cellulose, polysulfone, polyethylene, polypropylene, polybutene, polyacrylonitrile, polyimide, polyamide, and polyethylene terephthalate, and woven fabrics, non-woven fabrics, and microporous membranes in which two or more kinds of the polymers described above are combined. The nylon, cellulose, polysulfone, polyethylene, polypropylene, polybutene, polyacrylonitrile, polyimide, polyamide, and polyethylene terephthalate, and the non-woven fabrics in which two or more kinds thereof are combined are preferred because of the excellent stability of the cycle characteristics.

The separator may contain various plasticizers, anti-oxidants, flame-retardants, and the like, and may be covered with a metal oxide or the like. The various plasticizers, anti-oxidant, flame-retardant, and metal oxide are not particularly limited so long as they can be used in a lithium ion battery.

A thickness of the separator is not particularly limited, and it is preferably 10 µm or more and 100 µm or less. When the thickness is less than 10 µm, the positive electrode may sometimes be brought into contact with the negative electrode, and when it is more than 100 µm, the battery resistance may be increased. The thickness is more preferably 15 µm or more and 50 µm or less, in terms of economic aspects and handling aspects.

### <Non-aqueous electrolyte>

Non-aqueous electrolyte used in the laminate battery is not particularly limited, and it is possible to use a non-aqueous electrolytic solution in which a solute is dissolved in a non-aqueous solvent, a gel electrolyte in which a polymer is impregnated with an electrolytic solution in which a solute is dissolved in a non-aqueous solvent, and the like.

As the non-aqueous solvent, it is preferred to contain a cyclic aprotic solvent and/or a chain aprotic solvent. The cyclic aprotic solvent may include cyclic carbonates, cyclic esters, cyclic sulfones, cyclic ethers, and the like. As the chain aprotic solvent, a solvent which is generally used as a solvent for the non-aqueous electrolyte, such as chain carbonates, chainlike carboxylic acid esters, chain ethers, and acetonitrile, may be used. More specifically, it is possible to use dimethyl carbonate, methyl ethyl carbonate, diethyl carbonate, dipropyl carbonate, methyl propyl carbonate, ethylene carbonate, propylene carbonate, butylene carbonate, γ-butyl lactone, 1,2-dimethoxyethane, sulfolane, dioxolane, methyl propionate, and the like. These non-aqueous solvents may be used alone or as a mixture of two or more kinds thereof. It is preferred to use a mixed solvent in which the two or more kinds of these non-aqueous solvents are mixed because of the easiness in dissolution of a solute described below and the high conductivity of the lithium ion.

When the two or more kinds of the non-aqueous solvents are mixed, a mixture of at least one chain carbonate exemplified by dimethyl carbonate, methyl ethyl carbonate, diethyl carbonate, dipropyl carbonate, and methyl propyl carbonate, and at least one cyclic compound exemplified by ethylene carbonate, propylene carbonate, butylene carbonate, and γ-butyl lactone, is preferred because of the high stability at high temperatures and the high lithium conductivity at low temperatures; and a mixture of at least one chain carbonate exemplified by dimethyl carbonate, methyl ethyl carbonate, and diethyl carbonate, and at least one cyclic carbonate exemplified by ethylene carbonate, propylene carbonate, and butylene carbonate, is particularly preferred.

The solute is not particularly limited, and for example, LiClO₄, LiBF₄, LiPF₆, LiAsF₆, LiCF₃SO₃, LiBOB (lithium bis(oxalate)borate), and LiN(SO₂CF₃)₂ are preferred because they are easily dissolved in the non-aqueous solvent. The solute is dissolved in the electrolytic solution in a concentration of preferably 0.5 mol/L or more and 2.0 mol/L or less. When the concentration is less than 0.5 mol/L, the desired lithium ion conductivity may not be exhibited. Meanwhile, when the concentration is more than 2.0 mol/L, the solute may not be dissolved any more.

The non-aqueous electrolyte may contain an additive for forming a coating film on the electrode surface, in order to provide the flame retardancy and to inhibit the occurrence of side-reaction between the non-aqueous electrolyte and the electrode.

The amount of the non-aqueous electrolyte used in the laminate battery is not particularly limited, and the amount is preferably 0.1 mL or more per Ah of the battery capacity. When the amount is less than 0.1 mL, the lithium ion conductivity does not catch up with the electrode reaction, and the desired battery characteristics may not be exhibited.

### <Outer packaging>

An outer packaging of the laminate battery is formed from a laminate film and has, in the inside thereof, a battery part which is a space in which the layered body exists and a bag part which is a space having a changeable volume and communicating to the battery part through a communication part and is disposed on the other side part opposite to the one side part.

A material of the laminate film is not particularly limited, so long as the laminate film can be sealed by heat-melting, and can prevent the infiltration of moisture from the outside and the leakage of the non-aqueous electrolytic solution from the inside. Specific examples of the material may include composite films in which a thermoplastic resin layer for heat-sealing is formed on a metal foil.

The metal foil is not particularly limited so long as it can improve the strength of the sheet as a whole while it prevents the infiltration of moisture from the outside. An aluminum foil can be preferably used, in terms of the moisture barrier property, the weight, and the cost. A sheet in which a metal layer is provided by evaporation or spattering may be used instead of the metal foil, if the strength of the entire sheet can be secured.

A composition of the thermoplastic resin layer is not particularly limited, and polyethylene and polypropylene are preferably used, in terms of the temperature range feasible for heat-sealing and the blocking properties to the non-aqueous electrolyte.

A size of the laminate film is not particularly limited so long as the laminate film has a size enough to contain the battery part, the communication part, and the bag part.

The outer packaging is formed by sealing the layered body and the non-aqueous electrolyte with the laminate film. For example, one laminate film is folded in two, the layered body is put between the two film parts, and then the four sides of the laminate film are sealed; the layered body is held between the two laminate films, and then the four sides of the laminate films are sealed. In particular, when the two laminate sheets are used, the alignment can be easily performed, and thus a percentage of defects can be reduced during the production.

### <Battery part>

The battery part is a part in which the layered body is enclosed by the two laminate films forming the outer packaging.

A part of the laminate film situated on the battery part of the laminate battery may be subjected to drawing processing for securing a depth corresponding to the thickness of the layered body, in order to provide a space in which the layered body exists inside the laminate battery. In this case, one of the two laminate films may be subjected to the drawing processing or both may be subjected to the drawing processing.

In any of the cases where the drawing is performed in one side and in the both sides, the total value of the depth of the drawing is preferably ±1 mm of the thickness of the layered body because it is difficult to generate wrinkles on the sealing in a reduced pressure; more preferably ±0.8 mm because the binding of the layered body is strong; particularly preferably ±0.5 mm because an effect of applying a pressure to the layered body can be expected on the sealing in a reduced pressure.

### <Bag part>

The laminate battery has a bag part for collecting gas generated at the layered body in the battery part during the charging and discharging. The bag part is a space surrounded by the laminate film of the outer packaging, and the inside space of the battery part in which the layered body is enclosed is communicated with the inside space of the bag part through the communication part. As the laminate battery has such a structure, the gas generated at the layered body in the battery part can flow into the bag part through the communication part.

A shape and a size of the bag part are not particularly limited so long as the bag can house the gas generated at the battery part.

A part of the laminate film situated on the bag part may or may not be subjected to the drawing processing. For example, it is preferred that the bag part is not subjected to the drawing processing so that a size of the bag part can freely be set in view of design of the battery pack described below, to thereby form a space having a volume which is changeable for accepting a larger amount of the gas easily when the gas flows in the space.

With respect to the bag part, in the laminate battery, at least one bag part is disposed on the other side part opposite to the one side part in which the electrode terminals are disposed. In the laminate battery, when the processing such as enclosure using the outer packaging is insufficient, the gas generated at the layered body in the battery part is easily leaked outside from the laminate battery. Accordingly, when the bag part is disposed close to the electrode terminals, the gas leakage frequently occurs because the distance traveled by the gas to the electron terminals is short. On the contrary, in the battery pack of the present invention, the laminate battery has the structure in which the bag part is disposed on the opposite side of the electrode terminals, and is apart from the terminals, as described above, the occurrence of the gas leakage from a part of the electrode terminals can be inhibited.

When the gas generation amount is large, a plurality of the bag parts may be provided in the laminate battery. For example, whether one bag part has a large volume, or two or more bag parts each have decreased volumes can be appropriately selected. However, the existence of the bag part leads to the increased volume of the entire laminate battery, and thus the requisite minimum is preferred.

In order to efficiently house the gas generated at the battery part in the bag part and to prevent the back flow of the gas housed in the battery part, a length including the bag part, which is a distance from an end of the other side part of the laminate battery to the center of the communication part, is preferably 25% or more of the full length of the laminate battery, which is a distance from the end of the other side part to the end of the one side part, and more preferably 75% or less in order to increase the battery capacity per unit volume of the battery pack of the present invention. The bag part may be disposed in a folded state depending on the design of the battery pack.

### <Communication part>

The communication part is provided between the battery part and the bag part. The communication part is a space surrounded by the laminate film serving as the outer packaging, which communicates the space of the battery part to the space of the bag part.

Here, in the battery part, the bag part, and the communication part, the two laminate films forming the outer packaging are not fused and bonded to each other to form a non-fusion bonded part. In contrast, in the peripheries of the battery part, the bag part, and the communication part, the two laminate films forming the outer packaging are fused to each other to form a fusion bonded part. The inside of the outer packaging including the battery part, the communication part, and the bag part is divided into the fusion bonded part of the laminate films and the non-fusion bonded part in which the laminate films are not fused.

In the non-fusion bonded part forming the communication part, the two laminate films forming the outer packaging are not fused and bonded to each other, but the two laminate films may be brought into contact with each other so long as the gas can be moved due to difference in pressure between the battery part and the bag part. It is not necessary to actually have a volume for a space.

In the laminate battery, a ratio of the length of the non-fusion bonded part forming the communication part to the length of the fusion bonded part is preferably from 50/50 to 5/95 in a direction vertical to a direction from the one side part on which the electrode terminals are disposed to the other side part opposite thereto.

The length of the non-fusion bonded part in the direction vertical to the direction from the one side part on which the electrode terminals are disposed to the other side part opposite to the one side part corresponds to a width of the communication part. In the present invention, the width of the communication part is narrowed by adjusting the communication part so as to have the ratio described above, thereby preventing the gas once collected in the bag part from flowing back to the battery part. However, when the ratio of the length of the non-fusion bonded part to the length of the fusion bonded part is more than 50/50, the width of the communication part is increased. This causes the electrolytic solution in the battery part to easily flow back to the bag part. In contrast, when the ratio is less than 5/95, the width of the communication part is too narrow. This causes the gas generated at the battery part to be less movable to the bag part.

### <Electrode terminal>

The electrode terminals are electrically connected to the layered body, and extend from the one side part of the outer packaging of the laminate battery. It is one of characteristics of the present invention that the electrode terminals are disposed in the one side part of the plate. Accordingly, with respect to the electrode terminals of the laminate battery, the positive electrode terminal electrically connected to the positive electrode and the negative electrode terminal electrically connected to the negative electrode are both disposed on the side of the one side part of the laminate battery. When the battery pack is produced by arranging a plurality of such laminate batteries, places which are occupied by the electrode terminal parts can be reduced in the battery pack, and thus the size of the battery pack can be decreased. In addition, it is possible to provide a connection part between the electrode terminals and an electrode cord on the lower side. This makes it easy to release the heat generated at the electrode cord disposed on the lower part of the battery pack to the upper part. As a result, the malfunction of a control board or the accelerating deterioration of the battery characteristics caused by heating the laminate battery can be inhibited.

### <Power cable>

In the lower side in the vertical direction of the battery pack of the present invention is disposed a power cable for charging and discharging on the battery pack. Specifically, one end of the power cable is electrically connected to the electrode terminal of the laminate battery disposed in the lower side of the battery pack in the vertical direction, and the other end of the power cable can be electrically connected to a battery charger or an electrical device which are external devices of the battery pack.

A size and a material of the power cable are not particularly limited so long as a desired electric power can be safely charged in and discharged from the battery pack, and, for example, a power cable which can be used for an ordinary lithium ion battery may be used.

The arrangement of the power cable disposed in the lower side in the vertical direction of the battery pack of the present invention is not also particularly limited so long as the desired electric power can be safely charged in and discharged from the battery pack. The power cable is preferably contained in a bottom member supporting the battery pack, in terms of easiness in heat radiation and effective utilization of spaces.

A plurality of the battery packs of the present invention are combined depending on the necessary electric power, and preferably housed in a housing, and the resulting product is used as a power storage unit. In any case, a bottom member which supports a weight of the battery pack containing the battery assembly as a main component is required. The power cable is preferably contained in the bottom member by, for example, being embedded therein, in order to prevent unexpected electric shock, or to protect the power cable so that an external force is not applied to the cable, whereby a system having a reliability is constructed.

As the material of the bottom member, resin materials such as polypropylene resins and acrylic resins may be used, or metal materials such as stainless steel (SUS) on which an insulating treatment is performed by coating, may be used.

A shape and a size of the bottom member are not particularly limited so long as they can hold the plurality of the laminate batteries arranged in the vertical direction.

### <Control unit>

The battery pack of the present invention may contain a control unit configured to control the charging and discharging. The control unit has, specifically, a function for forcibly intercepting the charging and discharging current upon detection of a pre-determined abnormal voltage value, abnormal current value, or abnormal temperature.

It is preferred that the control unit is disposed in the lower side of the battery pack of the present invention in the vertical direction, in a similar manner as the power cable, so as to be connected to the power cable with a short distance. This allows the wiring to be simplified, and materials for the wiring to be decreased. In addition, the lower side can be maintained at a comparatively low temperature in the battery pack during the practical use, to thereby decrease a probability of the malfunctions of the control unit.

In addition to the function described above, the control unit preferably performs a self-discharge controlling step for forcibly causing a laminate battery, which causes variation in capacities of the laminate batteries, to perform self-discharging, when the capacities of the laminate batteries in the battery pack vary.

The variation in the capacities of the laminate batteries can be evaluated by monitoring a voltage value of each of the laminate batteries in the battery pack. The self-discharge may be performed at charging or discharging. Here, the self-discharge is preferably performed at charging, particularly at full-charging, because the battery capacity is easily adjusted.

In the self-discharge controlling step, for example, a resistor is provided in the control unit, and a current of a laminate battery to be evaluated is applied thereto through a bypass, and the current is discharged.

It is more preferred that the control unit contains a self-discharge load resistor which generates heat during the self-discharge, because the battery pack of the present invention can be charged and discharged at a higher performance and a higher reliability.

### <Outer packaging container>

In the battery pack of the present invention, in order to maintain an external form of the plurality of the laminate batteries arranged in the bottom member, the battery pack may be housed in an outer packaging container made of resin. Any shape can be used for the outer packaging container so long as the external form of the plurality of the laminate batteries can be maintained. For example, a lid covering the battery assembly of the laminate batteries may be put on the bottom member to form an outer packaging container containing the bottom member and the lid, or an outer packaging container capable of housing the battery pack together with the bottom member may be used.

In addition, it is enough that the terminals of the electric cables connecting to the laminate batteries are drawn out on the outside of the outer packaging container, in order to electrically connect it to the outside.

### <Pressing mechanism>

The battery pack of the present invention may contain a pressing mechanism, which presses the layered body through the outer packaging in a direction vertical to the plate-shaped surface of the laminate battery.

In the pressing mechanism, an in-plane distribution of a surface pressure when the pressure is applied contains a minimum saddle part containing a lowest point at which the surface pressure is the lowest, and the pressing mechanism presses the layered body in the battery part through the laminate film serving as the outer packaging so that the communication part is located on the minimum saddle part.

Accordingly, in the plate-shaped surface of the laminate battery, the surface pressure generated by the pressing mechanism has a distribution in which the pressure is the highest at a vicinity of the end part of the plate-shaped surface and the lowest at the communication part.

In the present invention, the minimum saddle part refers to a part which contains the lowest point of the surface pressure in the in-plane distribution of the surface pressure, and can make the surface pressure lower than that of the vicinity of the end part of the plate-shaped surface of the laminate battery.

The pressing mechanism having the minimum saddle part may include, for example, a flexible pressure sheet which is disposed between the adjacent laminate batteries, has an area covering the layered body through the laminate film, and contains a recess part corresponding to the minimum saddle part.

When the pressure sheet is pressed to the surface of the laminate battery, the recess part on the pressure sheet surface does not press the surface of the laminate battery. Even if the recess part presses the surface of the laminate battery, the surface pressure at the part pressed by the recess part is the lowest because of the low surface pressure. In contrast, the surface of the pressure sheet other than the recess part is brought into contact with the surface of the laminate battery, so that the surface pressure is generated thereat.

It is preferred that the surface pressure distribution of the surface pressure contains two maximum points including a highest point at which the surface pressure is the highest as one of the maximum points, and the minimum saddle part is located between the two maximum points. It is more preferred that, in the surface pressure distribution, the pressure is gradually decreased from the end part of the laminate battery to a center line part which corresponds to the communication part, to thereby place the communication part to be disposed on a part extended from the center line part in planar view.

A shape of the recess part is not particularly limited so long as the lowest point of the surface pressure is located at the communication part of the laminate battery. For example, the thickness of the pressure sheet is gradually decreased from the end to the center part so that a cross-sectional shape in the thickness direction of the pressure sheet is V-shaped, square, semicircular, or stair-shaped, or recess part has a circular, triangle, square, or polygonal shape in planar view.

A depth of a recessing part provided on the recess part may be adjusted so that the depth is gradually made deeper from the end part of the pressure sheet to the center line part which corresponds to the communication part.

The recess part may be formed from one pressure sheet, or two or more pressure sheets may be combined to form the recess part.

When two or more pressure sheets are combined, each of the pressure sheets preferably may have a trapezoid or triangle shape in a cross sectional view. The two or more of such pressure sheets are arranged so that a thin part of the pressure sheet is positioned at a part to be the recess part, or the plurality of the sheets are separated to allow the thickness of the pressure sheet to be 0 in the recess part, depending on the necessity.

The pressure sheet on which the recess part is provided may be combined with a planar pressure sheet. When such a planar pressure sheet is used, the surface pressure distribution can be more easily controlled.

A thickness of the pressure sheet is not particularly limited, and the thickness of the thickest part is preferably 0.3 mm or more and 1 mm or less, in order to sufficiently exhibit the effects of the present invention, while the thickness of the battery pack should not be too thick. The thinnest part preferably has a thickness of 1% to 80% of the thickness of the thickest part. When the thickness is less than 1%, the pressure is concentrated on only the end part and the pressure is hardly applied to the center part. This causes the surface distribution of the electrode reaction to be uneven and the rate characteristics to be reduced, though the gas can be guided. Meanwhile, when the thickness is more than 80%, it is difficult to collect the gas to the center part, and the capacity is reduced during the cycle operation, i.e., the lifetime characteristic is reduced.

A material of the pressure sheet is not particularly limited, and may include resin materials such as rubber. As the rubber, it is possible to use fluororubber, chloroprene rubber, EPDM, silicone rubber, or butyl rubber. The rubber preferably has a hardness of 20 or more and 70 or less, more preferably 25 or more and 65 or less, because it is easy to slant the surface pressure. A value of the rubber hardness can be measured in accordance with JIS K 6253.

In the surface pressure distribution of the pressure sheet, the surface pressure is preferably 0.05MPa or more and 5 MPa or less at a place having the highest pressure (the maximum point). When the surface pressure is less than 0.05 MPa around the maximum point, the pressure is hardly applied to the communication part by the minimum saddle part. This causes the surface distribution of the electrode reaction to be uneven, and the rate characteristic to be reduced, though the gas can be guided from the battery part to the bag part. Meanwhile, when the surface pressure is more than 5 MPa around the maximum point, the pressure is strongly applied to the communication part by the minimum saddle part. Accordingly, it is difficult to move the gas through the communication part, and thus it is difficult to move the gas to the bag part.

The surface pressure distribution can be confirmed using a pressure-measuring sheet (a prescale).

It is also preferred that the pressing mechanism contains a pair of pressure plates, which hold the battery assembly in which the plurality of the laminate batteries are arranged in a direction vertical to the plate-shaped surface of the laminate battery and the pressure sheet is disposed between the laminate batteries, and each of the two pressure plates has a surface larger than that of the pressure sheet.

The battery assembly is held by the pressure plates from the outside thereof, thereby further securing the contact between the laminate battery and the pressure sheet disposed between them, and allowing the surface pressure distribution to be easily adjusted to a desired value.

A material for the pressure plate is not particularly limited so long as the laminate battery is not damaged when the battery assembly is held from the outside to be pressurized, and examples thereof may include metal plates such as stainless steel (SUS) and aluminum.

It is preferred that the pressing mechanism further contains a highly pulling rigid girder which pulls the pair of the pressure plates inward.

The highly pulling rigid girder refers to a bar-shaped article capable of pulling (holding) the pair of pressure plates to an inside where the battery assembly of the laminate batteries exist.

The holding-type highly pulling rigid girder may include, for example, a bolt-type bar-shaped article having a screw groove at the tip part thereof. In this case, holes are provided at two to four corners of the pair of the pressure plates, the bolt-type bar-shaped articles are passed into the holes with the battery assembly being held between the pressure plates, and nuts are put into the tips and the bolts are fixed with the nuts, whereby the pressure plates can be pulled inward.

The highly pulling rigid girder may have a structure in which the length of the bar-shaped article is stretchable. For the situation, the bar-shaped articles are passed into the holes in a stretched state with the battery assembly being held between the pressure plates, nuts are put into the tips, and the bar-shaped article is shrunk. Accordingly, the pressure plates can be pulled inward.

Materials for the bar-shaped article and the nut are not particularly limited so long as the performances of the battery cannot be affected, and the materials may include metals, resins, and the like.

The layered body is pressed from the both sides thereof by the pressing mechanism so that the gas generated at the layered body in the battery part is guided to the bag part, and thus the reduction of the battery characteristics including the cycle characteristic can be inhibited. Furthermore, electrodes are appropriately pressurized in the same direction as the laminating direction of the layered body, and thus the battery pack having the excellent rate characteristic and cycle characteristic can be realized.

It is also a preferred embodiment that a spring is disposed between the pressure plate and the battery assembly. The number of the springs is preferably three or more so that the press caused by the pressure plate can be uniformly applied to the battery assembly.

### <Power storage unit>

In the battery pack of the present invention, the bag part in which the gas is collected can also exhibit a function as an insulating material. When a plurality of the battery packs of the present invention are arranged so that on an upper side in the vertical direction of one of the battery packs is disposed a lower side in the vertical direction of another battery pack to form a power storage unit, an influence caused by heat generation in the one of the battery packs can be inhibited so that the heat generation does not affect other battery packs. Furthermore, when the battery packs are disposed vertically in the space, the installation area can be decreased, and thus the highly reliable power storage unit capable of maintaining the high efficiency can be obtained.

The power storage unit as described above preferably contains a control part for the power storage unit. The control part for the power storage unit preferably contains, for example, a PV unit which charges an electric power generated by a photovoltaic battery (PV) to the power storage unit, or discharges electric power as a supply from the power storage unit to the PV for melting snow on a roof, for example. It is also preferred that a system interconnection unit which allows the power storage unit to perform charging and discharging on commercial power supply is contained. It is more preferred that both of them are contained.

Next, embodiments of the battery pack and the power storage unit of the present invention are explained using the drawings.

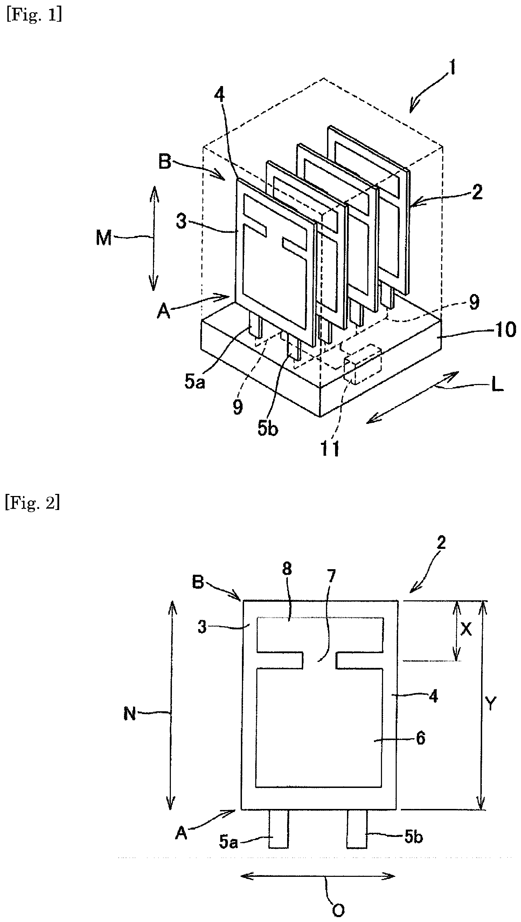

Fig. 1 shows a battery pack 1 of the present invention. Fig. 1 is a perspective view of a battery pack 1 of the present invention.

In the battery pack 1, a plurality of plate-shaped laminate batteries 2 are arranged in a direction L vertical to a plate-shaped surface 3 of the laminate battery 2.

The laminate battery 2 has, as shown in Fig. 2, a layered body (not shown) including a negative electrode, a separator, and a positive electrode disposed parallel to the plate-shaped surface 3, an outer packaging 4 formed from a laminate film in which the layered body is enclosed, and electrode terminals 5a and 5b which are electrically connected to the layered body and extend from a side A of a one side part of the outer packaging 4.

The layered body is produced by laminating positive electrodes, negative electrodes, and separators, which are cut into pre-determined sized, in the order of the positive electrode, the separator, the negative electrode, the separator, the positive electrode, and the separator. At that time, the separator may be formed into a zigzag form, other than the cutting into the pre-determined sized.

A shape and a size of the electrode terminals 5a and 5b are not particularly limited so long as both the electrode terminal of the positive electrode and the electrode terminal of the negative electrode can be disposed at the side A of the laminate battery 2, and a shape and a size are the same as those of a terminal used in an ordinary laminate battery. An electrical connection mode between the electrode terminals 5a and 5b and the layered battery is not particularly limited, and the same mode used in an ordinary laminate battery may be used.

The outer packaging 4 has, in the inside thereof, a battery part 6 which is a space in which the layered body exists, and a bag part 8 which is a space having a changeable volume and communicating to the battery part 6 through a communication part 7 and is disposed on a side B of other side part opposite to the side A of the one side part.

In the laminate battery 2, the inside of the outer packaging 4 is divided into a non-fusion bonded part and fusion bonded part of the laminate film. The non-fusion bonded part includes the battery part 6, the communication part 7, and the bag part 8, whereas fusion bonded part includes peripheries of the battery part 6, the communication part 7, and the bag part 8.

When a ratio of the length of the non-fusion bonded part forming the communication part 7 to the length of the fusion bonded part is adjusted to 50/50 to 5/95 in a direction O vertical to a direction N from the side A of the one side part to the side B of the other side part of the laminate battery 2, as shown in Fig. 2, the width of the communication part 7 becomes narrower, and thus it is possible to inhibit the gas once collected in the bag part 8 from flowing back to the battery part 6.

In addition, when a length X including that of the bag part 8, which is a distance from an end part of the side B of the other side part to the center of the communication part 7 of the laminate battery 2, as shown in Fig. 2, is adjusted to 25% or more of the full length Y of the laminate battery, which is a distance from the end part of the side B of the other side part to the end part of the side A of the one side part, the gas generated at the battery part 6 can be efficiently housed in the bag part 8, and the back flow of the gas once housed to the battery part 6 can be prevented.

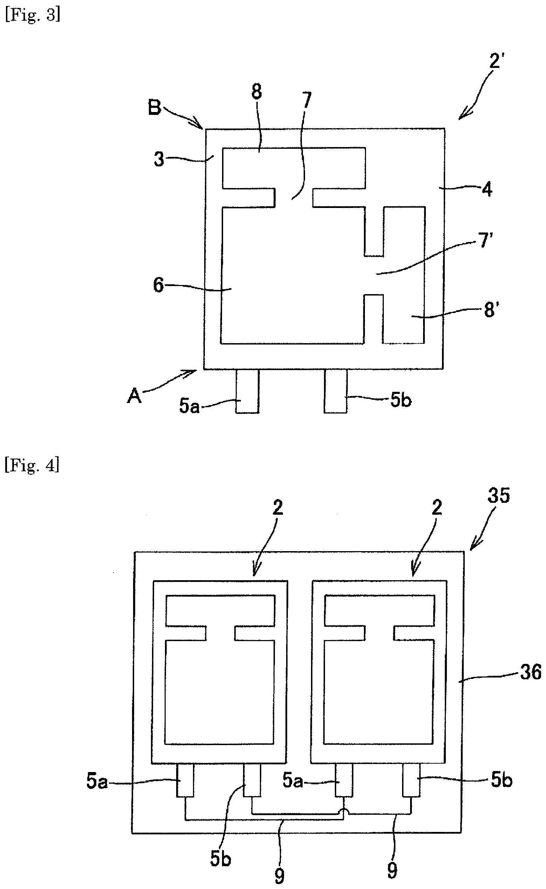

The laminate battery 2 may also have a plurality of other bag parts 8 in addition to the bag part 8 disposed on the side B of the other side part. For example, the number of bag parts 8 on the side B of the other side part may be one as shown in Fig. 3, or may be divided into a plurality of bag parts 8 each of which has a small volume, through a plurality of the communication parts 7, which is not shown in the drawings.

As a laminate battery 2' shown in Fig. 3, not only the bag part 8 is disposed on the side B of the other side part opposite to the side A of the one side part at which the electrode terminals 5a and 5b are disposed but also the bag part 8' may be disposed on a right side of the laminate battery 2' through a communication part 7'.

A shape and a size of the bag part 8' disposed on a position other than the side B of the other side part are not particularly limited so long as it is disposed at a position apart from the electrode terminals 5a and 5b.

It is enough in the laminate battery 2 that at least four sides of the two laminate films between which the layered body is held are welded and sealed to each other, thereby enclosing the layered body.

In the battery pack 1, a plurality of the laminate batteries 2 are arranged so that the side B of the other side part of the laminate battery 2 is disposed on the upper side in the vertical direction M, and the side A of the one side part of the laminate battery 2 is disposed on the lower side in the vertical direction M.

As shown in Fig. 1, in the battery pack 1 having a plurality of the laminate batteries 2, the power cable 9 for the charging and discharging to the battery pack 1 is disposed in the lower side in the vertical direction M. A bottom member 10 is disposed on the lower side in the vertical direction M of the battery pack 1, and a power cable 9 is embedded in the bottom member 10.

Specifically, as shown in Fig. 4, when two laminate batteries 2 are used, it is only required that the electrode terminals 5a of the positive electrodes are electrically connected to each other and the electrode terminals 5b of the negative electrodes are electrically connected to each other through the power cables 9. Similarly, when three or more laminate batteries 2 are used, it is only required the electrode terminals of the positive electrodes are connected to each other and the electrode terminals of the negative electrodes are connected to each other through the power cables.

The power cable 9 is connected to a power cable of an external electric device or charger, or another battery pack 1 if necessary, whereby electricity can be given and taken between each device and the battery pack 1.

The battery pack 1 may father contain, as shown in Fig. 1, a control unit 11 configured to control the charging and discharging in the lower side in the vertical direction.

The control unit 11 is electrically connected to at least one of the laminate batteries 2 contained in the battery pack 1, and is configured to perform a self-discharge controlling step for allowing the laminate battery 2 to perform a self-discharging. The control unit 11 further contains a self-discharge load resistor which generates heat during self-discharge. In addition, as shown in Fig. 1, the control unit 11 may be electrically connected to all of the laminate batteries 2 through the power cables 9.

The battery pack 1 contains a pressing mechanism, which presses the layered body through the outer packaging 4 in a direction L vertical to the plate-shaped surface 3 of the laminate battery 2.

The pressing mechanism includes a minimum saddle part covering a lowest point at which the surface pressure is the lowest in terms of an in-plane distribution of the surface pressure when the plate-shaped surface 3 of the laminate battery 2 is pressed. In addition, the pressing mechanism is adjusted so that the communication part 7 of the laminate battery 2 is located at the minimum saddle part.

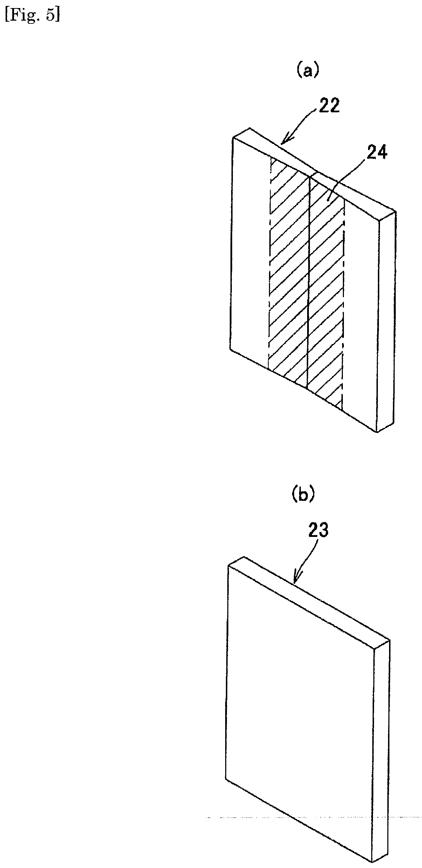

The pressing mechanism may include, for example, a pressure sheet 22 shown in Fig. 5 (a). The pressure sheet 22 is a flexible pressure sheet which is disposed between the adjacent laminate batteries 2, has an area covering the layered body which is located in the battery part 6 of the laminate battery 2 through the laminate film forming the outer packaging 4, and contains a recess part corresponding to the minimum saddle part 24 on the surface thereof. For example, it is exemplified by a rubber plate whose thickness is made thinner from both ends to the central part thereof, like the pressure sheet 22 shown in Fig. 5 (a). In the pressure sheet 22, a part having a weak power for pressing the laminate battery 2, including a part having the lowest surface pressure, is a minimum saddle part 24 among the part having a thin thickness.

The pressure sheet 22 may be formed of coupled two sheets, each of which has a slanted thickness. In this case, when two or more of the pressure sheets are combined, each of the pressure sheets preferably may have a trapezoid or triangle shape in cross sectional view. The two or more of such pressure sheets may be arranged so that a thin part of the pressure sheet is positioned at a part to be the minimum saddle part 24, or the plurality of the sheets may be separated to allow the thickness of the pressure sheet 22 to be 0 in the minimum saddle part 24, in some cases.

The pressure sheet 22 may be combined with a pressure sheet 23 shown in Fig. 5 (b). The pressure sheet 23 is a rubber plate without a recess part which serves as the minimum saddle part 24, unlike the pressure sheet 22. Specifically, the rubber plate has plane surfaces opposite to each other which are neither divided nor slanted.

As a rubber material used for the rubber plate, it is possible to use fluororubber, chloroprene rubber, EPDM, silicone rubber, or butyl rubber. The rubber has preferably a hardness of 20 or more and 70 or less, more preferably 25 or more and 65 or less, because it is easy to slant the surface pressure. A value of the rubber hardness can be measured in accordance with JIS K 6253.

A thickness of the pressure sheet 22 or 23 is not particularly limited, and the thickness of the thickest part of the pressure sheet is preferably 0.3 mm or more and 1 mm or less, in order to sufficiently exhibit the effects of the present invention with preventing the thickness of the battery pack 1 from increasing when the battery pack 1 is produced. The thinnest part preferably has a thickness of 1% to 80% of the thickness of the thickest part.

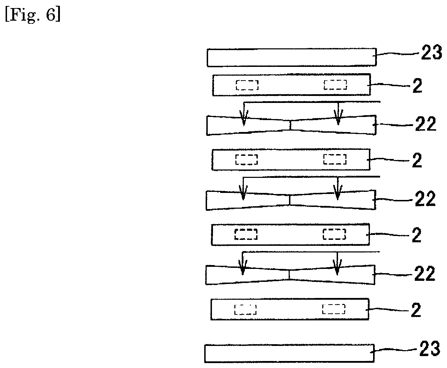

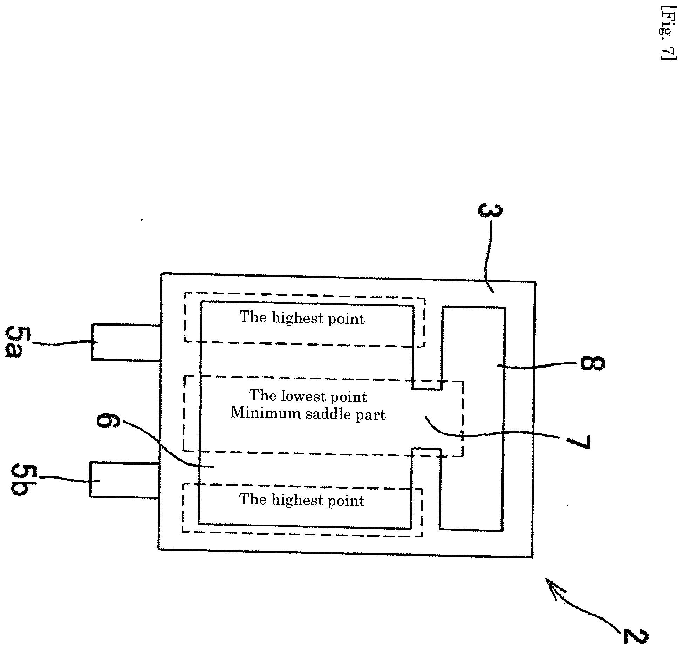

The pressure sheets 22 and 23 are disposed between the laminate batteries 2. For example, as shown in Fig. 6, these are arranged in the order of the pressure sheet 23, the laminate battery 2, the pressure sheet 22, the laminate battery 2, and the pressure sheet 22, and terminates with the pressure sheet 23 following the laminate battery 2, and then a space between the outermost pressure sheets 23 is narrowed until the members are brought into contact with each other. This causes a surface pressure distribution to occur on the surface of the laminate battery 2 brought into contact with the pressure sheet 22, so that the surface pressure on the center part containing the communication part 7 of the laminate battery 2 contains the lowest point, and the surface pressures on the both end parts of the battery part 6 contain the highest point, as shown in Fig. 7.

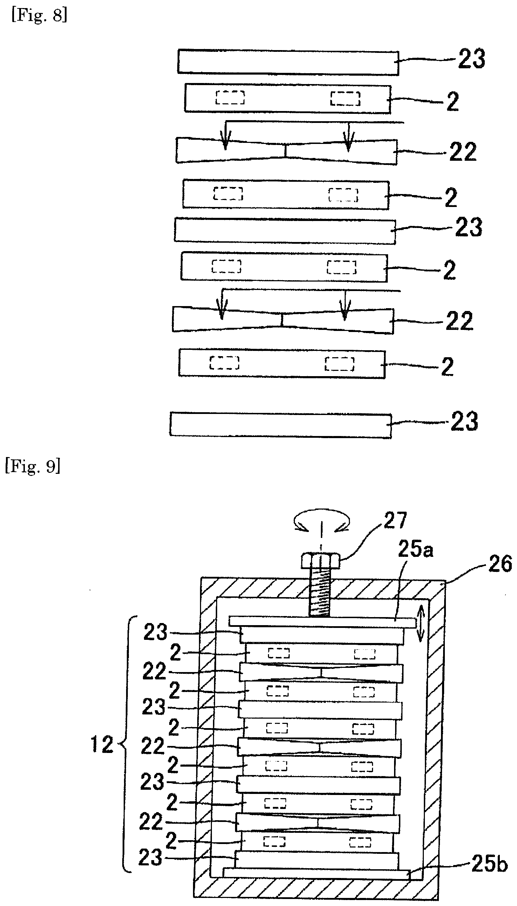

Any arrangement may be used as the arrangement of the pressure sheets 22 and 23 so long as the surface pressure distribution occurs as described above. An arrangement in which the laminate battery 2 is put between the pressure sheet 22 and the pressure sheet 23, as shown in Fig. 8, may be used.

The pressing mechanism may contain a pair of pressure plates 25a and 25b in addition to the pressure sheets 22 and 23.

The pressure plates 25a and 25b are a tool of a pair of pressure plates, which presses plane surfaces of the pressure sheets 22 and 23 from the outside, holds the battery assembly 12 in which a plurality of the laminate batteries 2 are arranged in a direction vertical to the plate-shaped surface 3 of the laminate battery 2, and has an area larger than that of the pressure sheet 22 or 23.

For example, the pressure plate 25a or 25b is only required to have an area covering the pressure sheet 22 in planar view, and preferably to cover the pressure sheet 23 in addition.

Fig. 9 is an explanatory view illustrating one example of methods in which a pair of the pressure plates 25a and 25b are disposed on the outside of the battery assembly 12 including the laminate batteries 2, the pressure sheets 22, and pressure sheets 23 which are laminated, and a pressure is applied to at least one pressure plate 25a from the outside using a screw 27.

As shown in Fig. 9, the battery assembly 12 is disposed in a rectangular parallelepiped highly pulling rigid battery pack storage case 26 whose side surfaces are the pressure plates 25a and 25b which are metal plates or the like, and a screw 27 is screwed into a screw hole provided in another side of the case 26 facing the one side of the pressure plate 25a. Accordingly, the pressure plate 25a is pressed and moved in an inward direction of the case 26, and the battery assembly 12 can be pressed between the pressure plate 25a and the other pressure plate 25b on the opposite side.

The highly pulling rigid battery pack storage case 26 refers to a case formed from a material having a rigidity capable of standing a pressure when the pressure is applied to the battery assembly 12 housed therein in the inside direction.

In the present invention, for example, the battery assembly 12 which is the layered body including the laminate batteries 2 and the pressure sheets 22 and 23 is housed in the case 26 formed from plates of a metal such as stainless steel (SUS) or aluminum, and the pressure plate 25a of the metal, such as stainless steel (SUS)or aluminum, is pushed using a bolt 27, whereby the pressurization can be performed while the pressure is controlled.

The pressure plate 25b may be stuck to the wall of the case 26, or may be fixed on a desired position.

According to the method using such a highly pulling rigid battery pack storage case 26, the battery pack 1 is completely housed in the case 26, and thus even if the laminate batteries 2 housed therein are disassembled in the worst case, it is possible to prevent a bad influence on surroundings, and the high safety is provided.

The screw 27 may be formed so that a pressure is applied to the pressure plate 25b. Besides the screw, any device capable of applying a pressure to the pressure plates 25a and 25b can be used in the present invention.

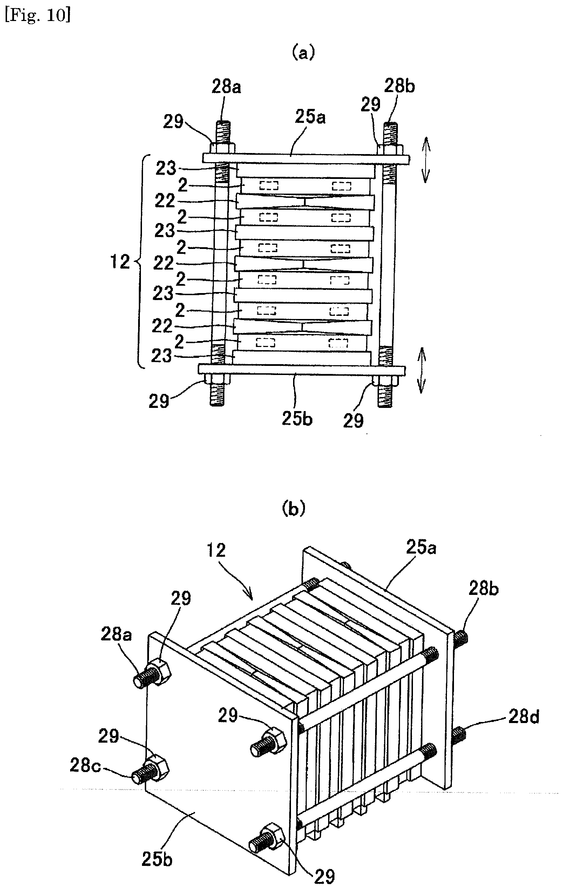

As shown in Figs. 10 (a) and 10 (b), a simpler pressing mechanism is exemplified by a mechanism in which a highly pulling rigid girder 28 instead of the highly pulling rigid battery pack storage case 26 pulls (presses) inward the pair of the pressure plates 25a and 25b. Accordingly, the battery assembly 12 is compressed from the both sides thereof. In order to apply the surface pressure to the whole surface of the layered body disposed in the battery part 6 of the laminate battery 2 by applying a pressure from the pressure plates 25a and 25b, whose shape is preferably rectangular, at least two of the highly pulling rigid girders 28 penetrates through the pressure plates 25a and 25b at vicinities of both sides or at two corners facing to each other of the plates, and preferably four of the highly pulling rigid girders 28 (28a, 28b, 28c, and 28d) penetrates through the pressure plates 25a and 25b at four corners of the plates, as shown in Figs. 10 (a) and 10(b). The highly pulling rigid girder 28 has a screw thread for screwing at least one end thereof, in order to enable the pressure plates 25a and 25b to move in an inward direction. As shown in Figs. 10 (a) and 10(b), an end part of the highly pulling rigid girder 28 may be attached so as to penetrate the pressure plates 25a and 25b to facilitate the screw-in by using the nut 29. One end part of the highly pulling rigid girder 28 may be made screwable, and the other end part may be bonded to either the pressure plate 25a or 25b, although not shown in the drawings.

An embodiment in which, as the pressing mechanism, a spring is disposed between the pressure plates 25a and 25b and the battery assembly 12 is also preferred, and the number of the springs is preferably three or more so that the pressure, caused by the pressure plates 25a and 25b, is equally applied to the battery assembly 12.

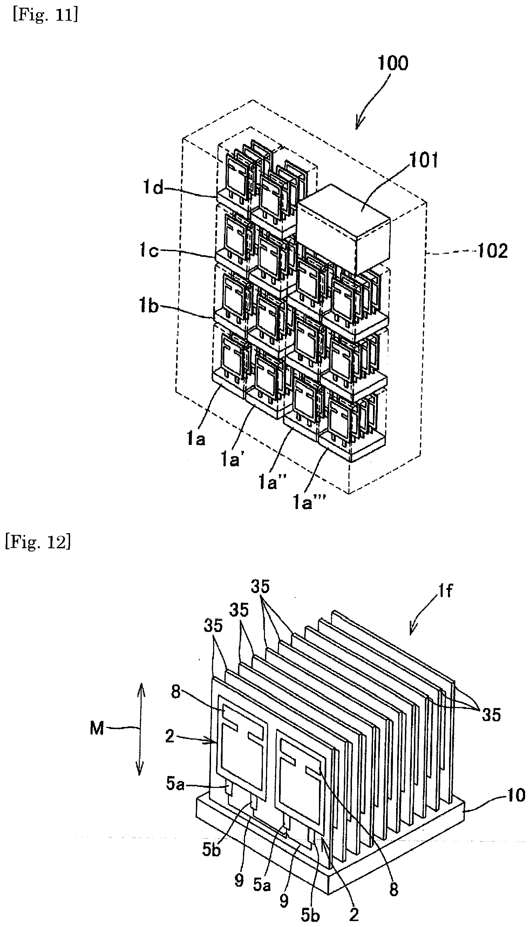

A power storage unit may be produced combining a plurality of the battery packs 1 of the present invention having the structure described above. A combination mode is not particularly limited, and when the power storage unit is formed by arranging a plurality of the battery packs 1 in a manner that on the upper side in the vertical direction of one of the battery packs 1 is disposed the lower side in the vertical direction of another one of the battery packs 1, an influence caused by heat generation in the one of the battery packs can be inhibited so that the heat generation does not affect other battery packs, and the installation area can be decreased by disposing the battery packs vertically in the space, thereby obtaining the highly reliable power storage unit capable of maintaining the high efficiency. For example, as shown in Fig. 11, a power storage unit 100 in which on the upper side in the vertical direction of the one battery pack 1a is disposed the lower side in the vertical direction of another battery pack 1b may be listed. On the upper side in the vertical direction of the battery pack 1b is disposed the lower side in the vertical direction of another battery pack 1c, and on the upper side in the vertical direction of the battery pack 1c is disposed the lower side in the vertical direction of another battery pack 1d. Other battery packs 1a', 1a", and 1a'" are disposed on the right side of the battery pack 1a, so that they face the same direction, and other battery packs are disposed on the upper side in the vertical direction of the battery packs 1a', 1a", and 1a'".

The power storage unit 100 as described above preferably contains a control part 101 for the power storage unit. The control part 101 for the power storage unit preferably contains, for example, a PV unit which charges an electric power generated by a photovoltaic battery (PV) to the power storage unit 100, or which discharges electric power as a supply from the power storage unit 100 to the PV, for example, in order to melt snow on a roof. It is also preferred that a system interconnection unit which allows the power storage unit 100 to perform charging and discharging on commercial power supply is contained. It is more preferred that both of them are contained.

In the power storage unit 100, it is preferred that the battery packs 1 and, if necessary, the power storage control unit 101 are housed in the housing 102.

### Examples

### (Production example of positive electrode)

As a positive electrode active material used for a positive electrode of production example 1, a spinel-type lithium manganate (Li_{1.1}Al_{0.1}Mn_{1.8}O₄) was used.

A slurry of a mixture of the spinel-type lithium manganate (Li_{1.1}Al_{0.1}Mn_{1.8}O₄) containing a conductive assistant (acetylene black), and a binder (PVdF), in solid concentrations of 100 parts by weight,5 parts by weight, and 5 parts by weight, respectively, was prepared. At that time, as the binder, an N-methyl-2-pyrrolidone (NMP) solution whose solid concentration was adjusted to 5 wt% was used, and NMP was further added thereto to adjust a viscosity so that coating described below was easily performed.

The resulting slurry was coated on an aluminum foil (15 µm), and then dried to remove the solvent. The step described above was performed on both sides of the aluminum foil to produce a positive electrode.

### (Production example of negative electrode)

As a negative electrode active material, a spinel-type lithium titanate (Li_{4/3}Ti_{5/3}O₄) was used. A slurry of a mixture of the negative electrode active material, a conductive assistant (acetylene black), and a binder (PVdF), in solid concentrations of 100 parts by weight, 5 parts by weight, and 5 parts by weight, respectively, was prepared. As the binder, an NMP solution whose solid concentration was adjusted to 5 wt% was used, and NMP was further added thereto to adjust a viscosity so that coating described below was easily performed. The resulting slurry was coated on an aluminum foil (15 µm), and then dried to remove the solvent. The step described above was performed on both sides of the aluminum foil to produce a negative electrode.

### (Production example of laminate battery)

A laminate battery having a structure shown in Fig. 2 was produced as follows:

The positive electrode (10 cm × 10 cm, a thickness of 0.15 mm, 30 electrodes, 340 mAh/electrode (which is the total capacity of the both sides)) produced in production example described above, and the negative electrode (10.5 cm × 10.5 cm, a thickness of 0.14 mm, 31 electrodes, 397 mAh/electrode (which the total capacity of the both sides)) produced in production example described above were laminated using a separator (a cellulose non-woven fabric, a width of 11 cm, a thickness of 0.03 mm) formed into a zigzag form in the order of the negative electrode, the separator, the positive electrode, the separator, the negative electrode, with a termination of the negative electrode, whereby a layered battery (a thickness of 1.0 cm) used for a laminate battery of the present invention was produced.

Next, one aluminum positive electrode terminal, used in common, underwent ultrasonic welding to be fused and bonded to a tab part of the positive electrode of the layered body, and similarly, one aluminum negative electrode terminal, used in common, underwent the ultrasonic welding to be fused and bonded to a tab part of the negative electrode of the layered body, whereby a layered body to which electrode terminals were attached in which the positive electrode having a capacity of 30 electrodes × 340 mAh = 10.2 Ah faced the negative electrode having a capacity of 31 electrodes × 397 mAh = 12.3 Ah was obtained.

Next, the layered body provided with the electrode terminals was put between two laminate films. At that time, parts thereof corresponding to the end parts of the battery part 6, in which the layered body was disposed, had been previously subjected to drawing processing, and a length X including a length of the bag part 8 intended to collect gas was adjusted to 30% of the full length Y of the laminate battery, from the other side part B to the one side part A. Three side parts, including the end part of the side A of the one side part including the electrode terminals 5a and 5b, were heat-fused, and then a boundary between the battery part 6 and the bag part 8 was heat-fused so that the laminate films could contain a fusion bonded part in which the inside and outside of plate-shaped laminate films were fused to each other in 60% of the width thereof along an entire width direction O of the plate, and a non-fusion bonded part in which parts other than the above were not fused and bonded.

Finally, an electrolytic solution (amount of the solution: 50 g, solvent: EC/PC/EMC = 15/15/70 vol%, solute: LiPF₆, 1 mol/L) was poured into the battery part 6, in which the layered body is put between the laminate films, from the side B of the other end part, and the end part of the side B of the other end part was heat-fused in a reduced pressure, whereby a laminate battery (rated voltage: 2.48 V, rated capacity: 10 Ah, length in N direction: 17 cm, length in O direction: 12 cm, thickness: 1.0 cm) was produced.

### (Example 1: Production example of battery pack)

A battery pack, shown in Fig. 12, was produced in a method described below.

First, as shown Fig. 4, the laminate batteries 2 were connected vertically and horizontally to the laminating direction of the layered body, i.e., two batteries were arranged in the lamination plane of the layered body, and the positive electrode terminals 5a were electrically connected to each other on one main surface 36 and the negative electrode terminals 5b were electrically connected to each other on the other main surface, whereby a laminate battery primary assembly 35 of one series and two parallel connections was produced.

As shown in Fig. 4, in the present Example, in order to hold an external form of the laminate battery primary assembly 35, using a polypropylene plate-shaped article (length: 25 cm, width: 30 cm, thickness: 0.1 cm) as the main surface 36, the two laminate batteries 2 were fixed on the surface of the plate-shaped article, while the terminal parts 5a and 5b of the electrodes are exposed. Fig. 4 is a cross-sectional conceptual view showing the laminate battery primary assembly 35 after it was housed in the resin plate-shaped article.

Next, as shown in Fig. 12, a battery pack If in which ten laminate battery primary assemblies 35 were arranged in the laminating direction of the layered body was produced.

In this battery pack If, a power cable (not shown) for charging and discharging on each laminate battery 2 forming the laminate battery primary assembly 35 was contained in a bottom member 10 disposed on a lower part of the laminate battery primary assemblies 35, and was placed on the bottom member 10 supporting the battery pack 1f. Furthermore, a necessary electrical connection was established between the laminate battery primary assemblies 35 and the power cable (not shown), whereby the battery pack 1f, in which ten rows of the laminate battery primary assemblies 35 were connected in series, i.e., the laminate batteries 2 were connected in ten series and two parallel connections, was produced. Fig. 12 is a conceptual view showing the battery pack If produced in Example 1.

In the battery pack 1f, the bag part 8 of each laminate battery 2 was disposed on the upper side in the vertical direction M, and the side A of the one side part containing the electrode terminals 5a and 5b was disposed on the bottom side in the vertical direction M. In addition, each laminate battery 2 was electrically connected to a copper plate (not shown) in the bottom member 10 through the electrode terminals 5a and 5b by ultrasonic fusion. Furthermore, the bottom member 10 contained the power cable (not shown) for charging and discharging, and a control unit (not shown) capable of performing self-discharge.

### (Example 2: Production example of power storage unit)

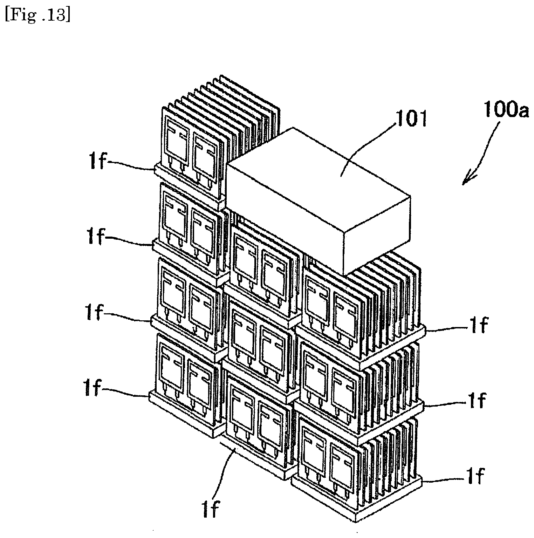

Next, the battery packs 1f produced in Example 1 were disposed in three rows in the horizontal direction (the four packs in the vertical direction in the first row, and the three packs in the vertical direction in each of the second and third rows), and the ten battery packs If were electrically connected in series to produce a power storage unit 100a. Fig. 13 is a conceptual view showing the power storage unit 100a.

In the power storage unit 100a, a hundred of the two laminate batteries 2 connected to each other in parallel were connected in series, or the ten of the battery packs If of the present invention were connected in series. Such a power storage unit 100a is referred to as "a hundred series and two parallel connections" based on the laminate battery.

The power storage unit 100a has a rated voltage of 248V and a rated capacity of 20 Ah (about 5 kWh), and contains a control part 101 for the power storage unit which is independent from the battery pack If, as a part of the power storage unit 100a, in addition to the control unit, which is a part of the battery pack 1f.

### (Comparative Example 1)

A battery pack in which ten laminate battery primary assemblies were arranged was produced in the same manner as in Example 1 except that, in the laminate battery primary assembly 35 shown in Fig. 12, the bag part 8 of the laminate battery 2 was disposed on the lower side in the vertical direction M, and the side part containing the electrode terminals 5a and 5b was disposed on the upper side in the vertical direction M. In the battery pack produced in Comparative Example 1, the power cables were connected to the electrode terminals 5a and 5b disposed in the upper side in the vertical direction, and the power cables were exposed on the upper side in the vertical direction of the battery packs.

Next, except that the battery packs produced above were used, a power storage unit in which the battery packs were disposed in three rows in the horizontal direction (the four packs in the vertical direction in the first row, and the three packs in the vertical direction in each of the second and third rows), and ten battery packs were electrically connected in series was produced in the same manner as in Example 2.

### (Comparative Example 2)

Battery packs were produced in the same manner as in Example 1, except that the bag part 8 was not disposed in the laminate battery 2, and a power storage unit was produced in the same manner as in Example 2, except that the battery packs produced above were used.

The power storage unit 100a produced in Example 2, and the power storage units produced in Comparative Examples 1 and 2 were subjected to charging and discharging operation 100 times at a current value of 10 A in an environment of 45°C. As a result, the power storage unit 100a produced in Example 2 worked without any problem, and the capacity reduction was only less than 5% of the rated capacity.

In contrast, in the power storage unit produced in Comparative Example 1, the capacity was reduced by 10% or more, compared to the power storage unit 100a produced in Example 2, and the charging and discharging was stopped three times by malfunction of the control board caused by heat because of insufficient heat radiation. The power storage unit produced in Comparative Example 2 had no bag body for collecting the gas, which causes the capacity of each laminate battery to remarkably reduce as the charging and discharging was repeated, and to cause the gas to leak. This stops the charging and discharging at the 80th time.

From the results above, it is understood that the battery pack 1f of the present invention exhibits the excellent operational stability even after the repeated charging and discharging, can maintain the high efficiency, and has the especially improved reliability, compared to the battery packs from Comparative Examples 1 and 2.

### Reference Signs List

1 Battery pack
2 Laminate battery
3 Plate-shaped surface of laminate battery 2
4 Outer packaging
5 Electrode terminal
6 Battery part
7 Communication part
8 Bag part
9 Power cable
10 Bottom member
11 Control unit
12 Battery assembly
22 Pressure sheet
23 Pressure sheet
24 Minimum saddle part
25 Pressure plate
26 Highly pulling rigid battery pack storage case
27 Screw
28 Highly pulling rigid girder
29 Nut
100 Power storage unit
101 Control part for power storage unit
102 Housing
A One side part
B Other side part
L Direction vertical to plate-shaped surface 3 in laminate battery 2
M Vertical direction of battery pack 1
N Direction from side A of one side part to side B of other side part of the laminate battery 2
O Direction vertical to direction N from the side A of one side part to side B of other side part of laminate battery 2
X Length containing that of bag part 8, which is distance from end part of side B of other side part of laminate battery 2 to center of communication part 7
Y Laminate full length from end part of side B of other side part to end part of side A of one side part

## Claims

1. A battery pack comprising:
a plurality of plate-shaped laminate batteries arranged in a direction vertical to a plate-shaped surface of one of the laminate batteries,
wherein the laminate battery contains:
a layered body including a negative electrode, a separator, and a positive electrode, the layered body being disposed parallel to the plate-shaped surface of the laminate battery;
an outer packaging including a laminate film enclosing the layered body; and
an electrode terminal which is electrically connected to the layered body and extends from a one side part of the outer packaging,
the outer packaging has, in an inside thereof:
a battery part having a space in which the layered body exists; and
a bag part having a space a volume of which is changeable, and communicating to the battery part through a communication part, the bag part being disposed on another side part opposite to the one side part,
the battery pack includes:
the laminate batteries arranged in a manner to have the other side part on an upper side of the battery pack in the vertical direction, and to have the one side part on a lower side of the battery pack in the vertical direction; and
a power cable for charging and discharging the battery pack is disposed in the lower side of the battery pack in the vertical direction.

2. The battery pack according to claim 1, wherein the laminate battery has a plurality of bag parts.

3. The battery pack according to claim 1 or 2, further comprising a control unit configured to control the charging and discharging, and the control unit being disposed in the lower side in the vertical direction.

4. The battery pack according to claim 3, wherein the control unit is configured to perform self-discharge controlling for allowing at least one of the laminate batteries contained in the battery pack to perform self-discharging, and the control unit contains a self-discharge load resistor which generates heat during the self-discharge.

5. The battery pack according to any of claims 1 to 4, wherein the power cable is contained in a bottom member supporting the battery pack.

6. The battery pack according to any of claims 1 to 5, wherein an inside of the outer packaging, which includes the battery part, the communication part, and the bag part, is divided into a fusion bonded part and a non-fusion bonded part of the laminate film, the communication part is formed of the non-fusion bonded part, and a ratio of a length of the non-fusion bonded part to a length of the fusion bonded part is from 50/50 to 5/95 in a direction vertical to a direction from the one side part to the other side part.

7. The battery pack according to any of claims 1 to 6, wherein a length including a length of the bag part, which is a distance from an end of the other side part of the laminate battery to a center of the communication part, is 25% or more of a full length of the laminate battery, which is a distance from the end of the other side part to an end of the one side part.

8. The battery pack according to any of claims 1 to 7, wherein two laminate films including the laminate film, between which the layered body is held, are fused to be sealed to each other at least at four sides of the laminate films, thereby enclosing the layered body.

9. The battery pack according to any of claims 1 to 8, wherein the negative electrode contains as a negative electrode active material thereof, a titanium-containing oxide.

10. The battery pack according to any of claims 1 to 9, comprising
a pressing mechanism configured to apply a pressure to the layered body through the outer packaging in the direction vertical to the plate-shaped surface of the laminate battery,
wherein the pressing mechanism includes a minimum saddle part containing a lowest point at which a surface pressure is lowest in terms of an in-plane distribution of the surface pressure when the pressure is applied, and the communication part is located on the minimum saddle part.

11. The battery pack according to claim 10, wherein the in-plane distribution contains two maximum points including a highest point at which the surface pressure is the highest as one of the maximum points, and the minimum saddle part is located between the two maximum points.

12. The battery pack according to claim 10 or 11, wherein the pressing mechanism contains a flexible pressure sheet which is disposed between the adjacent laminate batteries, has an area covering the laminate battery through the laminate film, and contains a recess part corresponding to the minimum saddle part on a surface of the flexible pressure sheet.

13. The battery pack according to claim 12, wherein the pressing mechanism further contains a pair of pressure plates which hold a battery assembly in which the laminate batteries are arranged in the direction vertical to the plate-shaped surface of the laminate battery, each of the pair of the pressure plates having an area larger than an area of the flexible pressure sheet.

14. The battery pack according to claim 13, wherein the pressing mechanism further contains a highly pulling rigid girder configured to pull the pair of the pressure plates inward.

15. A power storage unit comprising
a plurality of the battery packs according to any of claims 1 to 14,
wherein on the upper side of one of the battery packs in the vertical direction is disposed the lower side of another battery pack in the vertical direction.

## Patentansprüche

1. Batteriepack, umfassend:
eine Vielzahl von plattenförmige Laminatbatterien, die in einer Richtung senkrecht zu einer plattenförmigen Oberfläche einer der Laminatbatterien angeordnet sind,
wobei die Laminatbatterie enthält:
einen Schichtkörper mit einer negativen Elektrode, einem Separator und einer positiven Elektrode, wobei der Schichtkörper parallel zu der plattenförmigen Oberfläche der Laminatbatterie angeordnet ist;
eine Außenverpackung, die eine Laminatfolie einschließt, die den Schichtkörper umschließt; und
einen Elektrodenanschluss, der elektrisch mit dem Schichtkörper verbunden ist und sich von einem Seitenteil der Außenverpackung erstreckt,
wobei die Außenverpackung in einem Inneren davon aufweist:
einen Batterieteil mit einem Raum, in dem sich der Schichtkörper befindet; und
einen Beutelteil mit einem Raum, dessen Volumen veränderbar ist und über einen Kommunikationsteil mit dem Batterieteil kommuniziert, wobei der Beutelteil an einem anderen Seitenteil gegenüber dem einen Seitenteil angeordnet ist,
wobei der Batteriepack einschließt:
die Laminatbatterien, die derart angeordnet sind, dass sich der andere Seitenteil in vertikaler Richtung auf einer Oberseite des Batteriepacks befindet und sich der eine Seitenteil in vertikaler Richtung auf einer Unterseite des Batteriepacks befindet; und
ein Stromkabel zum Laden und Entladen des Batteriepacks, das an der Unterseite des Batteriepacks in vertikaler Richtung angeordnet ist.

2. Batteriepack nach Anspruch 1, wobei die Laminatbatterie eine Vielzahl von Beutelteilen aufweist.

3. Batteriepack nach Anspruch 1 oder 2, weiter eine Steuereinheit umfassend, die konfiguriert ist, das Laden und Entladen zu steuern, wobei die Steuereinheit in vertikaler Richtung auf der Unterseite angeordnet ist.

4. Batteriepack nach Anspruch 3, wobei die Steuereinheit konfiguriert ist, eine Selbstentladungssteuerung durchzuführen, um zu ermöglichen, dass mindestens eine der in dem Batteriepack enthaltenen Laminatbatterien eine Selbstentladung durchführt, und die Steuereinheit einen Selbstentladungs-Lastwiderstand enthält, der während der Selbstentladung Wärme erzeugt.

5. Batteriepack nach einem der Ansprüche 1 bis 4, wobei das Stromkabel in einem Bodenelement enthalten ist, das den Batteriepack stützt.

6. Batteriepack nach einem der Ansprüche 1 bis 5, wobei eine Innenseite der Außenverpackung, die den Batterieteil, den Kommunikationsteil und den Beutelteil einschließt, in einen schmelzgebundenen Teil und einen nicht schmelzgebundenen Teil der Laminatfolie unterteilt ist, wobei der Kommunikationsteil aus dem nicht schmelzgebundenen Teil gebildet, und ein Verhältnis einer Länge des nicht schmelzgebundenen Teils zu einer Länge des schmelzgebundenen Teils 50/50 bis 5/95 in einer Richtung senkrecht zu einer Richtung von einem Seitenteil zum anderen Seitenteil beträgt.

7. Batteriepack nach einem der Ansprüche 1 bis 6, wobei eine Länge einschließlich einer Länge des Beutelteils, die ein Abstand von einem Ende des anderen Seitenteils der Laminatbatterie zu einer Mitte des Kommunikationsteils ist, 25 % oder mehr einer vollen Länge der Laminatbatterie beträgt, die ein Abstand von dem Ende des anderen Seitenteils zu einem Ende des einen Seitenteils ist.

8. Batteriepack nach einem der Ansprüche 1 bis 7, wobei zwei Laminatfolien, einschließlich der Laminatfolie, zwischen denen der Schichtkörper gehalten wird, so verschmolzen sind, dass sie an mindestens vier Seiten der Laminatfolien miteinander versiegelt sind, wodurch sie den Schichtkörper umschließen.

9. Batteriepack nach einem der Ansprüche 1 bis 8, wobei die negative Elektrode als aktives Material für die negative Elektrode ein titanhaltiges Oxid enthält.

10. Batteriepack nach einem der Ansprüche 1 bis 9, umfassend
einen Druckmechanismus, der konfiguriert ist, einen Druck auf den Schichtkörper durch die Außenverpackung in der Richtung senkrecht zu der plattenförmigen Oberfläche der Laminatbatterie auszuüben,
wobei der Druckmechanismus einen minimalen Sattelteil einschließt, der einen niedrigsten Punkt enthält, an dem ein Oberflächendruck in Bezug auf eine Verteilung in der Ebene des Oberflächendrucks am niedrigsten ist, wenn der Druck ausgeübt wird, und der Kommunikationsteil auf dem minimalen Sattelteil angeordnet ist.

11. Batteriepack nach Anspruch 10, wobei die Verteilung in der Ebene zwei Maximalpunkte enthält, einschließlich eines höchsten Punkts, an dem der Oberflächendruck als einer der Maximalpunkte am höchsten ist, und der minimale Sattelteil zwischen den zwei Maximalpunkten angeordnet ist.

12. Batteriepack nach Anspruch 10 oder 11, wobei der Druckmechanismus ein flexibles Druckblatt enthält, das zwischen den benachbarten Laminatbatterien angeordnet ist, eine Fläche aufweist, die die Laminatbatterie durch die Laminatfolie bedeckt, und einen Aussparungsteil enthält, der dem minimalen Sattelteil auf einer Oberfläche des flexiblen Druckblattes entspricht.

13. Batteriepack nach Anspruch 12, wobei der Druckmechanismus weiter ein Paar Druckplatten enthält, die eine Batterieanordnung halten, in der die Laminatbatterien in der Richtung vertikal zu der plattenförmigen Oberfläche der Laminatbatterie angeordnet sind, wobei jedes Paar der Druckplatten eine Fläche aufweist, die größer als eine Fläche des flexiblen Druckblattes ist.

14. Batteriepack nach Anspruch 13, wobei der Druckmechanismus weiter einen stark ziehenden starren Träger enthält, der konfiguriert ist, das Paar der Druckplatten nach innen zu ziehen.

15. Stromspeichereinheit, umfassend
Eine Vielzahl von Batteriepacks nach einem der Ansprüche 1 bis 14,
wobei auf der Oberseite eines der Batteriepacks in vertikaler Richtung die Unterseite eines anderen Batteriepacks in vertikaler Richtung angeordnet ist.

## Revendications

1. Bloc-piles comprenant :
une pluralité de piles stratifiées en forme de plaques agencées dans une direction verticale à une surface en forme de plaque de l'une des piles stratifiées,
dans lequel la pile stratifiée contient :
un corps en couches incluant une électrode négative, un séparateur et une électrode positive, le corps en couches étant disposé parallèlement à la surface en forme de plaque de la pile stratifiée ;
un emballage externe incluant un film stratifié enserrant le corps en couches ; et
une borne d'électrodes qui est connectée électriquement au corps en couches et s'étend depuis une première partie latérale de l'emballage externe,
l'emballage externe présente dans sa partie interne :
une partie de pile ayant un espace dans lequel se trouve le corps en couches ; et
une partie ensachée ayant un espace dont le volume peut être modifié et communiquant avec la partie de pile via une partie de communication, la partie ensachée étant disposée sur une autre partie latérale opposée à la première partie latérale,
le bloc-piles inclut :
les piles stratifiées agencées de manière que l'autre partie latérale se trouve sur un côté supérieur du bloc-piles dans la direction verticale et de sorte que la première partie latérale se trouve sur un côté inférieur du bloc-piles dans la direction verticale ; et
un câble d'alimentation pour charger et décharger le bloc-piles est disposé sur le côté inférieur du bloc-piles dans la direction verticale.

2. Bloc-piles selon la revendication 1, dans lequel la pile stratifiée a une pluralité de parties ensachées.

3. Bloc-piles selon la revendication 1 ou 2, comprenant en outre une unité de commande configurée pour commander le chargement et le déchargement, l'unité de commande étant disposée sur le côté inférieur dans la direction verticale.

4. Bloc-piles selon la revendication 3, dans lequel l'unité de commande est configurée pour effectuer une commande d'autodécharge afin de permettre à au moins l'une des piles stratifiées contenues dans le bloc-piles d'effectuer une autodécharge et l'unité de commande contient une résistance de charge d'autodécharge qui génère de la chaleur au cours de l'autodécharge.

5. Bloc-piles selon l'une quelconque des revendications 1 à 4, dans lequel le câble d'alimentation est contenu dans un élément inférieur supportant le bloc-piles.

6. Bloc-piles selon l'une quelconque des revendications 1 à 5, dans lequel l'intérieur de l'emballage externe, qui inclut la partie de pile, la partie de communication et la partie ensachée, est divisé en une partie liée par fusion et une partie non liée par fusion du film stratifié, la partie de communication est formée de la partie non liée par fusion et un rapport de la longueur de la partie non liée par fusion à la longueur de la partie liée par fusion est de 50/50 à 5/95 dans une direction verticale à une direction de la première partie latérale à l'autre partie latérale.

7. Bloc-piles selon l'une quelconque des revendications 1 à 6, dans lequel une longueur incluant une longueur de la partie ensachée, qui est une distance d'une extrémité de l'autre partie latérale de la pile stratifiée à un centre de la partie de communication, est de 25 % ou plus d'une pleine longueur de la pile stratifiée, qui est une distance de l'extrémité de l'autre partie latérale à une extrémité de la première partie latérale.

8. Bloc-piles selon l'une quelconque des revendications 1 à 7, dans lequel deux films stratifiés incluant le film stratifié, entre lesquels le corps en couches est maintenu, sont fusionnés pour être scellés l'un à l'autre au moins sur quatre côtés des films stratifiés, enserrant de la sorte le corps en couches.

9. Bloc-piles selon l'une quelconque des revendications 1 à 8, dans lequel l'électrode négative contient comme matériau actif de l'électrode négative un oxyde contenant du titane.

10. Bloc-piles selon l'une quelconque des revendications 1 à 9, comprenant :
un mécanisme de compression configuré pour appliquer une pression au corps en couches à travers l'emballage externe dans la direction verticale à la surface en forme de plaque de la pile stratifiée,
dans lequel le mécanisme de compression inclut une partie de selle minimale contenant un point le plus bas où la pression de surface est la plus basse en termes de distribution dans le plan de la pression de surface lorsque la pression est appliquée et la partie de communication est située sur la partie de selle minimale.

11. Bloc-piles selon la revendication 10, dans lequel la distribution dans le plan contient deux points maximaux incluant un point le plus élevé où la pression de surface est la plus élevée en tant que l'un des points maximaux et la partie de selle minimale est située entre les deux points maximaux.

12. Bloc-piles selon la revendication 10 ou 11, dans lequel le mécanisme de compression contient une feuille de pression souple qui est disposée entre les piles stratifiées adjacentes, a une zone recouvrant la pile stratifiée à travers le film stratifié et contient une partie évidée correspondant à la partie de selle minimale sur une surface de la feuille de pression souple.

13. Bloc-piles selon la revendication 12, dans lequel le mécanisme de compression contient en outre une paire de plaques de pression qui maintient un assemblage de piles, dans lequel les piles stratifiées sont agencées dans la direction verticale à la surface en forme de plaque de la pile stratifiée, chacune de la paire des plaques de pression ayant une surface supérieure à une surface de la feuille de pression souple.

14. Bloc-piles selon la revendication 13, dans lequel le mécanisme de compression contient en outre une entretoise rigide à traction élevée configurée pour tirer la paire de plaques de pression vers l'intérieur.

15. Unité de stockage d'énergie comprenant :
une pluralité des blocs-piles selon l'une quelconque des revendications 1 à 14,
dans laquelle on dispose sur le côté supérieur de l'un des blocs-piles dans la direction verticale le côté inférieur d'un autre bloc-piles dans la direction verticale.
